# FASCICULE DE BREVET EUROPEEN

(11) **EP 3 810 847 B1**
(45) Date de publication et mention de la délivrance du brevet: **29.10.2025**
(21) Numéro de dépôt: 19745669.2
(22) Date de dépôt: 04.06.2019
(51) Int. Cl.: D07B 1/06, B60C 9/00

(54) **CÂBLE MULTI-TORONS À DEUX COUCHES À PÉNÉTRABILITÉ AMÉLIORÉE**
DOPPELLAGIGES MEHRFACHSTRANGSEIL MIT VERBESSERTER DURCHLÄSSIGKEIT
DOUBLE-LAYER MULTI-STRAND CORD WITH IMPROVED PENETRABILITY

(30) Priorité: 20.06.2018 FR 1855455
(43) Date de publication de la demande: 28.04.2021
(73) Titulaire: COMPAGNIE GENERALE DES ETABLISSEMENTS MICHELIN, 63000 Clermont-Ferrand (FR)
(72) Inventeur: CHEVALLEY, Marianna, 63040 CLERMONT-FERRAND CEDEX 9 (FR); LAURENT, Stéphane, 63040 CLERMONT-FERRAND CEDEX 9 (FR); CLEMENT, Emmanuel, 63040 CLERMONT-FERRAND CEDEX 9 (FR); GIANETTI, Alexandre, 63040 CLERMONT-FERRAND CEDEX 9 (FR); PINAUT, Rémi, 63040 CLERMONT-FERRAND CEDEX 9 (FR)
(74) Mandataire: M.F.P. Michelin
(86) Numéro de dépôt international: PCT/FR2019/051308
(87) Numéro de publication internationale: WO 2019/243687

(56) Documents cités:
- WO-A1-2011/144472
- WO-A1-2015/193099
- WO-A2-2014/090996
- JP-A- 2006 291 376
- JP-A- 2006 291 419
- JP-A- 2006 291 419
- JP-A- 2008 260 409

## Description

L'invention concerne les câbles multi-torons utilisables notamment pour le renforcement de pneumatiques, particulièrement de pneumatiques pour véhicules industriels lourds.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. L'armature de carcasse et l'armature de sommet comprennent plusieurs nappes de composition élastomérique, éventuellement renforcées par des éléments de renfort tels que des câbles ou des monofilaments, de type métallique ou textile.

L'armature de carcasse est ancrée dans chaque bourrelet et surmontée radialement par l'armature de sommet. L'armature de carcasse comprend une nappe de carcasse comprenant des éléments filaires de renfort métalliques de carcasse. Chaque élément filaire de renfort métallique de carcasse fait un angle compris entre 80° et 90° avec la direction circonférentielle du pneumatique.

L'armature de sommet comprend généralement au moins deux nappes de sommet superposées, dites parfois nappes de travail ou nappes croisées, dont les éléments de renfort, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45°. Les nappes de travail comprennent généralement des éléments de renfort présentant un très faible allongement de façon à assurer leur fonction de guidage du pneumatique.

L'armature de sommet peut également comprendre diverses autres nappes ou couches de composition élastomérique auxiliaires, de largeurs variables selon les cas, comportant ou non des éléments de renfort. On citera à titre d'exemple des nappes dites de protection chargées de protéger le reste de la ceinture des agressions externes, des perforations, ou encore des nappes dites de frettage comportant des éléments de renfort orientés sensiblement selon la direction circonférentielle (nappes dites à zéro degré), qu'elles soient radialement externes ou internes par rapport aux nappes de travail. Les nappes de protection comprennent généralement des éléments de renfort présentant un allongement élevé de façon à se déformer sous l'effet d'une contrainte exercée par un indenteur, par exemple un rocher.

On connait de l'état de la technique un élément de renfort des nappes décrites ci-dessus comprenant un câble métallique multi-torons à deux couches tel que divulgué dans les exemples de WO2011064065, WO2016202622 et WO2009048054. Ces câbles comprennent une couche interne du câble constituée d'un toron interne et une couche externe du câble constituée de six torons externes enroulés en hélice autour de la couche interne du câble.

Chaque toron interne et externe comprend une couche interne du toron constituée de deux, trois ou quatre fils internes, une couche intermédiaire constituée de sept à neuf fils intermédiaires et une couche externe constituée de douze à quinze fils externes. Les couches intermédiaire et externe du toron interne sont enroulées dans le sens Z autour respectivement des couches interne et intermédiaire du toron interne. Les couches intermédiaire et externe de chaque toron externe sont enroulées dans le sens Z autour respectivement des couches interne et intermédiaire de chaque toron externe. Les torons externes sont enroulés en hélice autour du toron interne dans un sens d'enroulement du câble, celui-ci étant le sens S.

On connaît également de l'état de la technique des câbles multi-torons tels que divulgués dans WO2014090996, WO2011144472, JP2005314833 ou JP2006291419A.

Un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques des différentes armatures, notamment des nappes de sommet, et réduisent considérablement la durée de vie du pneumatique.

Une solution pour augmenter la durée de vie du pneumatique est de lutter contre la propagation de ces agents corrosifs. On peut ainsi prévoir de recouvrir chaque couche interne et intermédiaire d'une composition élastomérique lors de la fabrication du câble. Lors de ce procédé, la composition élastomérique présente pénètre dans les capillaires présents entre chaque couche de chaque toron et empêche ainsi la propagation des agents corrosifs. De tels câbles, généralement appelés câbles gommés in situ, sont bien connus de l'état de la technique.

Une autre solution pour augmenter la durée de vie du pneumatique est d'augmenter la force à rupture du câble. Généralement, on augmente la force à rupture en augmentant le diamètre des fils constituant le câble et/ou le nombre de fils et/ou la résistance unitaire de chaque fil. Toutefois, augmenter davantage le diamètre des fils, par exemple au-delà de 0,50 mm, entraine nécessairement une baisse de la flexibilité du câble ce qui n'est pas souhaitable. Augmenter le nombre de fils entraine la plupart du temps une baisse de la pénétrabilité des torons par la composition d'élastomère. Enfin, augmenter la résistance unitaire de chaque fil nécessite des investissements importants dans les installations de fabrication des fils.

L'invention a pour but un câble présentant une pénétrabilité améliorée de ses torons externes et une meilleure accessibilité de chaque toron interne par la composition d'élastomère par rapport au câble de l'état de la technique permettant ainsi de réduire l'entrée et la propagation des agents corrosifs dans et le long du câble.

### CABLE SELON L'INVENTION

A cet effet, l'invention a pour objet un câble multi-torons à deux couches selon la revendication 1.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

Conformément à l'invention, la couche externe du câble est désaturée.

Par définition, une couche de torons désaturée est telle qu'il existe suffisamment d'espace entre les torons de façon à permettre le passage d'une composition d'élastomère. Une couche externe de torons désaturée signifie que les torons externes ne se touchent pas et qu'il y a suffisamment d'espace entre deux torons externes adjacents permettant le passage d'une composition d'élastomère jusqu'aux torons internes. Par opposition, une couche de torons saturée est telle qu'il n'existe pas suffisamment d'espace entre les torons de la couche de façon à permettre le passage d'une composition d'élastomère, par exemple car les torons de la couche se touchent deux à deux.

Conformément à l'invention, la distance E inter-torons de la couche externe de torons externes définie, sur une section du câble perpendiculaire à l'axe principal du câble, comme la distance la plus courte qui sépare, en moyenne, les enveloppes circulaires dans lesquelles sont inscrits deux torons externes adjacents, est supérieure ou égale à 70 µm. De préférence, la distance E inter-torons moyenne séparant deux torons externes adjacents est supérieure ou égale à 100 µm, encore plus préférentiellement à 150 µm et très préférentiellement à 200 µm.

Par « au moins deux couches », on entend que chaque toron interne peut être, dans certains modes de réalisation, à deux couches, c'est-à-dire qu'il comprend uniquement deux couches mais n'en comprend pas uniquement une, ni trois ; et que dans d'autres modes de réalisation, chaque toron interne peut être à trois couches, c'est-à-dire qu'il comprend uniquement trois couches mais n'en comprend pas uniquement deux, ni quatre.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux. La couche externe du câble est enroulée autour de la couche interne du câble au contact de la couche interne du câble.

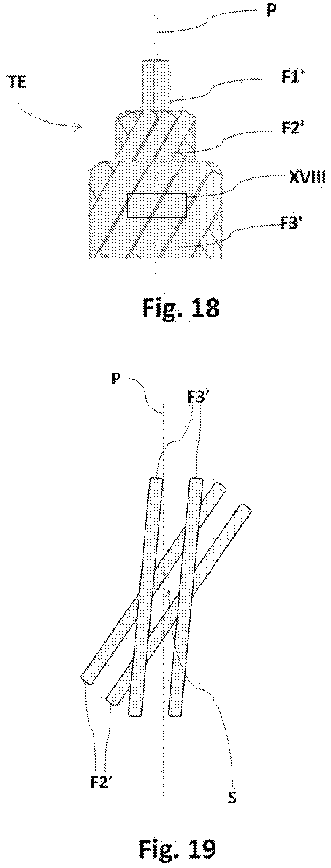

Le câble selon l'invention présente une pénétrabilité améliorée par rapport à un câble dont le rapport (p3'-p2')/p3' est en dehors de la plage de rapports conforme à l'invention. Les inventeurs à l'origine de l'invention émettent l'hypothèse que ce rapport permet d'obtenir des fenêtres de passage radial pour la composition d'élastomère relativement grandes au sein de chaque toron externe. Les fenêtres de passage radial sont définies comme étant l'intersection entre d'une part l'espace projeté sur un plan parallèle à l'axe principal du câble entre deux fils adjacents de la couche externe d'un toron externe et d'autre part l'espace projeté sur un plan parallèle à l'axe principal du câble entre deux fils adjacents de la couche intermédiaire de ce toron externe. Une telle fenêtre de passage radial est illustrée sur la figure 19.

De plus, grâce à la désaturation de la couche externe du câble, le câble selon l'invention présente des espaces entre les torons externes permettant le passage de la composition d'élastomère. Dans l'état de la technique, on connait des câbles présentant une force à rupture relativement élevée en raison de la saturation de la couche externe du câble (les torons externes sont deux à deux au contact les uns des autres) qui forme alors une voûte reprenant les efforts de traction s'exerçant sur le câble. Dans le câble selon l'invention, bien que l'on casse la voûte autour de la couche interne, la haute pénétrabilité des torons externes rendue possible par le rapport (p3'-p2')/p3' et la désaturation de la couche externe du câble permet à la composition d'élastomère de pénétrer d'une part, entre les torons externes et, d'autre part, entre les torons externes et chaque toron interne. Ainsi, on restaure au moins partiellement la voûte et donc on limite la perte de force à rupture du câble tout en assurant son excellente pénétrabilité En outre, cette caractéristique permet à la composition d'élastomère de s'infiltrer entre les couches externes des torons internes et externes de façon à créer un matelas de composition d'élastomère absorbant au moins partiellement la composante radiale de la force entre les torons interne et externes.

Dans un câble de l'état de la technique comprenant une couche interne du câble constituée d'un seul toron interne, une désaturation importante de la couche externe du câble aux fins de favoriser la pénétrabilité du câble entraine une perte significative de masse métal et donc une baisse relativement importante de la force à rupture du câble. Dans le câble de l'invention, une désaturation importante de la couche externe du câble aux fins de favoriser la pénétrabilité du câble entraine, du fait de la présence de K torons internes, une baisse moins significative de la masse métal et donc une baisse contrôlée de la force à rupture, au contraire des câbles de l'état de la technique dans lesquels la contribution de chaque toron externe à la force à rupture est plus importante que dans les câbles selon l'invention.

De par l'invention et la relation entre p2' et p3' et de par la relation entre p1', p2' et les sens des couches interne et intermédiaire de chaque toron externe, chaque toron externe est à couches cylindriques. De façon très avantageuse, chaque toron interne est à couches cylindriques que ce toron interne soit à deux ou trois couches. Un toron à couches cylindriques est très fortement pénétrable contrairement à un toron à couches compactes dans lequel les pas de toutes les couches sont égaux et les sens d'enroulement de toutes les couches sont identiques et présente une pénétrabilité bien plus faible.

De façon optionnelle et préférée, dans un mode de réalisation, le câble est dépourvu de toute composition polymérique, notamment le câble est dépourvu de gaine de toute composition polymérique recouvrant chaque toron interne. Dans un autre mode de réalisation, le câble est dépourvu de toute composition élastomérique, notamment le câble est dépourvu de gaine de toute composition élastomérique recouvrant chaque toron interne.

Avantageusement, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel câble métallique est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,4% et 1,2%, notamment entre 0,5% et 1,1% ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en œuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, chaque fil de chaque toron présente un diamètre allant de 0,15 mm à 0,60 mm, de préférence de 0,20 mm à 0,50 mm, plus préférentiellement de 0,22 mm à 0,40 mm et encore plus préférentiellement de 0,24 mm à 0,35 mm.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition d'élastomère ou composition élastomérique, on entend que la composition comprend au moins un élastomère ou un caoutchouc (les deux termes étant synonymes) et au moins un autre composant. De préférence, la composition d'élastomère comprend également un système de vulcanisation, une charge. Plus préférentiellement, l'élastomère est diénique.

Avantageusement :
- 0,38 ≤ (p3'-p2')/p3' dans le cas où Q'=2,
- 0,38 ≤ (p3'-p2')/p3' dans le cas où Q'=3.

Plus le rapport (p3'-p2')/p3' est important, autrement dit plus la différence entre p3' et p2' est importante, meilleure est la stabilité architecturale de chaque toron externe. En effet, plus les couches intermédiaire et externe de chaque toron externe présentent des pas différents, plus les fils intermédiaires et externes sont croisés les uns par rapport aux autres (les contacts entre les fils intermédiaires et externes sont alors relativement ponctuels), mieux les fils externes vont tenir mécaniquement les fils intermédiaires et meilleure sera la pénétrabilité de chaque toron externe dont les fils de couches intermédiaire et externe seront alors régulièrement répartis au sein de chaque couche intermédiaire et externe. Cette tenue mécanique permet d'éviter que, d'une part, lors de la fabrication du câble, tous les fils de la couche intermédiaire se regroupent tous au contact les uns des autres sous l'effet des efforts mécaniques exercés par les outils d'assemblage et, d'autre part, que lors de la fabrication d'une nappe comprenant le câble ou du pneumatique comprenant le câble, tous les fils de la couche intermédiaire se regroupent tous au contact les uns des autres sous l'effet de la pression de la composition d'élastomère pénétrant le câble.

En outre, pour un pas p3' donné, en augmentant le rapport (p3'-p2')/p3', on réduit la distance interfils de la couche intermédiaire de chaque toron externe. L'homme du métier se serait attendu à observer une baisse de la pénétrabilité de chaque toron externe. Or, de façon complètement inattendue, comme le montrent les essais comparatifs décrits ci-après, en augmentant le rapport (p3'-p2')/p3', on diminue certes la distance interfils de la couche intermédiaire de chaque toron externe mais on augmente la dimension des fenêtres de passage radial de la composition d'élastomère de sorte que la pénétrabilité de chaque toron externe est notablement améliorée.

Avantageusement :
- (p3'-p2')/p3' ≤ 0,42 et de préférence (p3'-p2')/p3' ≤ 0,40 dans le cas où Q'=2,
- (p3'-p2')/p3' ≤ 0,40 dans le cas où Q'=3,
- (p3'-p2')/p3' ≤ 0,40 et de préférence (p3'-p2')/p3' ≤ 0,38 dans le cas où Q'=4.

En dessous de ces valeurs, la dimension des fenêtres de passage radial de la composition d'élastomère est maximale et permet d'optimiser la pénétrabilité de chaque toron externe.

De façon avantageuse, le pas p1' est tel que 3 mm ≤ p1' ≤ 16 mm, de préférence 4 mm ≤ p1' ≤ 13 mm et plus préférentiellement 5 mm ≤ p1' ≤ 10 mm.

De façon avantageuse, le pas p2' est tel que 8 mm ≤ p2' ≤ 20 mm, de préférence 9 mm ≤ p2' ≤ 18 mm et plus préférentiellement 10 mm ≤ p2' ≤ 16 mm.

De façon avantageuse, le pas p3' est tel que 10 mm ≤ p3' ≤ 40 mm, de préférence 12 mm ≤ p3' ≤ 30 mm et plus préférentiellement 15 mm ≤ p3' ≤ 25 mm.

Des pas p1', p2' et p3' dans ces plages préférentielles permettent d'obtenir un câble présentant des propriétés mécaniques compatibles avec un usage pneumatique, un coût et une masse linéique du câble relativement faible.

Avantageusement, K=2, 3 ou 4, de préférence K=3 ou 4.

Dans un mode de réalisation, L est égal à 7, 8, 9 ou 10, de préférence L=8, 9 ou 10 et plus préférentiellement L=8 ou 9.

Dans une première variante, K=2 et L=7 ou 8.

Dans une deuxième variante, K=3 et L=7, 8 ou 9, de préférence K=3, L=8 ou 9. Dans le cas où L=8, on favorise la désaturation de la couche externe du câble et donc la pénétrabilité du câble entre les torons externes. Dans le cas où L=9, on maximise le nombre de torons externes et donc la force à rupture du câble.

Dans une troisième variante, K=4 et L=7, 8, 9 ou 10, de préférence K=4, L=9 ou 10.

Dans ces modes de réalisation, notamment ceux où K=3 ou 4, il existe un risque de voir une très forte propagation des agents corrosifs entre les K=3 ou 4 torons internes qui délimitent un capillaire central très favorable à leur propagation le long du câble, lorsque le câble est insuffisamment pénétré. Cet inconvénient peut être surmonté en rendant le câble pénétrable par la composition d'élastomère qui empêche alors les agents corrosifs d'accéder au capillaire central, et dans le meilleur des cas où le capillaire central est lui-même pénétré, la propagation de ces agents corrosifs le long du câble.

Comme déjà expliqué ci-dessus, les câbles selon l'invention présentant une architecture dans laquelle K>1, les efforts transversaux les plus sévères qui s'exercent dans le câble lorsque celui-ci est mis en tension sont les efforts transversaux s'exerçant entre les torons internes au contraire d'un câble dans lequel K=1 et dans lequel les efforts transversaux les plus sévères sont les efforts transversaux exercés par les torons externes sur les torons internes. Dans l'état de la technique, on connait des câbles présentant une architecture dans laquelle K>1 et comprenant un nombre de torons externes tels que la couche externe du câble soit saturée de façon à maximiser la force à rupture en ajoutant un nombre maximal de torons externes. Ici, grâce à la désaturation de la couche externe du câble, le câble présente, d'une part, des espaces entre les torons externes permettant le passage de la composition d'élastomère et donc de rendre le câble moins sensible à la corrosion. D'autre part, bien que l'on réduise le nombre de torons externes, la désaturation de la couche externe du câble permet à la composition d'élastomère de pénétrer d'une part, entre les torons externes et, d'autre part, entre les torons internes de façon à former un coussin de composition d'élastomère absorbant au moins partiellement les efforts transversaux s'exerçant entre les torons internes. Ainsi, par rapport à un câble analogue présentant une couche externe du câble saturée, on obtient un meilleur compromis force à rupture et résistance à la corrosion.

Dans un mode de réalisation favorisant la pénétrabilité du câble, la couche externe du câble est complétement insaturée.

Par définition, une couche complètement insaturée de torons est, par opposition à une couche incomplètement insaturée, telle qu'il existe suffisamment de place dans cette couche pour y ajouter au moins un (X+1)^{ième} toron du même diamètre que les X torons de la couche, plusieurs torons pouvant alors être ou non au contact les uns des autres. En l'espèce, il existe suffisamment de place dans la couche externe du câble pour y ajouter au moins un (L+1)^{ième} toron du même diamètre que les L torons externes de la couche externe du câble. Ainsi, avantageusement, la somme SIE des distances intertorons E de la couche externe du câble est telle que SIE ≥ DE. La somme SIE est la somme des distances intertorons E séparant chaque couple de torons adjacents de la couche. La distance intertorons d'une couche est définie, sur une section du câble perpendiculaire à l'axe principal du câble, comme la distance la plus courte qui sépare, en moyenne, deux torons adjacents de la couche. Ainsi, la distance intertorons E est calculée en divisant la somme SIE par le nombre d'espaces séparant les torons de la couche.

Dans un autre mode de réalisation favorisant le compromis entre pénétrabilité et force à rupture, la couche externe du câble est incomplètement insaturée.

Une couche incomplètement insaturée de torons est telle qu'il n'existe pas suffisamment de place dans cette couche pour y ajouter au moins un (X+1)^{ième} toron du même diamètre que les X torons de la couche. En l'espèce, il n'existe pas suffisamment de place dans la couche externe pour y ajouter au moins un (L+1)^{ième} toron externe du même diamètre que les L torons externes de la couche externe du câble. Ainsi, la somme SIE des distances intertorons E de la couche externe du câble est telle que SIE < DE.

Par définition, le diamètre d'un toron interne DI est le diamètre du cercle le plus petit dans lequel est circonscrit le toron interne. Le diamètre d'un toron externe DE est le diamètre du cercle le plus petit dans lequel est circonscrit le toron externe.

Dans un mode de réalisation préféré, la couche interne du câble est enroulée en hélice selon un pas pi non nul et la couche externe du câble est enroulée en hélice autour de la couche interne du câble selon un pas pe non nul.

Dans un mode de réalisation particulièrement avantageux pour la pénétrabilité du câble, la couche interne du câble est enroulée en hélice selon un sens de couche interne du câble selon un pas pi, la couche externe du câble est enroulée en hélice selon un sens de couche externe du câble selon un pas pe, le câble vérifie l'une et/ou l'autre des caractéristiques suivantes :
- le sens de couche interne du câble est différent du sens de couche externe du câble,
- pi est différent de pe.

Dans ce mode de réalisation, le câble présente une structure à couches cylindriques (par opposition à une structure compacte), favorisant la pénétrabilité du câble.

Dans un autre mode de réalisation, la couche interne du câble est enroulée en hélice selon un sens de couche interne du câble selon un pas pi, la couche externe du câble est enroulée en hélice selon un sens de couche externe du câble selon un pas pe, le câble vérifie les caractéristiques suivantes :
- le sens de couche interne du câble est identique au sens de couche externe du câble,
- pi est égal à pe.

Dans ce mode de réalisation, malgré la structure compacte difficilement pénétrable du câble, la haute pénétrabilité des torons externes permet d'obtenir néanmoins un câble pénétré de façon satisfaisante.

Optionnellement, chaque fil externe de chaque toron interne présente un diamètre d3 supérieur ou égal au diamètre d3' de chaque fil externe de chaque toron externe, de préférence chaque fil externe de chaque toron interne présente un diamètre d3 supérieur au diamètre d3' de chaque fil externe de chaque toron externe. Préférentiellement, grâce à la caractéristique d3>d3', chaque fil externe de chaque toron interne peut supporter la composante radiale de la force exercée par les torons externes sur chaque toron interne lors de la traction du câble. Cette caractéristique d3>d3' permet de restaurer, voire d'améliorer la force rupture du câble par rapport à un câble comprenant une voûte formée par les torons externes ou par rapport à un câble dans lequel d3≤d3'. De préférence, 1 < d3/d3' ≤ 2, plus préférentiellement 1 < d3/d3' ≤ 1,5 et encore plus préférentiellement 1 < d3/d3' ≤ 1,25 ou 1,25 < d3/d3' ≤ 1,5.

Dans un mode de réalisation avantageux, la couche externe du câble est enroulée autour de la couche interne du câble selon un sens d'enroulement de la couche externe du câble et chaque couche externe de chaque toron interne et externe est enroulée respectivement autour de la couche intermédiaire et interne respectivement de chaque toron interne et externe selon un même sens d'enroulement opposé au sens d'enroulement du câble. Dans ce mode de réalisation, le sens d'enroulement du câble opposé aux sens d'enroulement de chaque couche externe de chaque toron interne et externe permet une meilleure pénétrabilité du câble, notamment entre les torons externes. Les inventeurs émettent l'hypothèse que grâce à ces sens d'enroulements, les fils externes des torons externes croisent les fils externes de chaque toron interne en formant une zone de contact relativement ponctuelle contrairement à des câbles dans lesquels le sens d'enroulement du câble serait identique aux sens d'enroulement des couches externes de chaque toron interne et externe et dans lequel les fils externes des torons externes croiseraient les fils externes du toron interne en formant une zone de contact moins ponctuelle et plus linéique, empêchant le passage de la composition d'élastomère jusqu'à la couche interne.

### Torons externes du câble selon l'invention

Dans des modes de réalisation, M'=7, 8, 9 ou 10, N'=12, 13, 14 ou 15.

Dans une première variante, Q'=2, M'=7 ou 8 et N'=12 ou 13. Dans le cas où M'=7 et/ou N'=12, on favorise la désaturation de la couche intermédiaire ou externe de chaque toron externe et donc la pénétrabilité du câble au travers des torons externes. Dans le cas où M'=8 et/ou N'=13, on maximise le nombre de fils intermédiaires ou externes et donc la force à rupture du câble.

Dans une deuxième variante, Q'=3, M'=8 ou 9 et N'=13 ou 14. Dans le cas où M'=8 et/ou N'=13, on favorise la désaturation de la couche intermédiaire ou externe de chaque toron externe et donc la pénétrabilité du câble au travers des torons externes. Dans le cas où M'=9 et/ou N'=14, on maximise le nombre de fils intermédiaires ou externes et donc la force à rupture du câble.

Dans une troisième variante, Q'=4, M'=9 ou 10 et N'=14 ou 15. Dans le cas où M'=9 et/ou N'=14, on favorise la désaturation de la couche intermédiaire ou externe de chaque toron externe et donc la pénétrabilité du câble au travers des torons externes. Dans le cas où M'=10 et/ou N'=15, on maximise le nombre de fils intermédiaires ou externes et donc la force à rupture du câble.

Dans ces modes de réalisation, notamment ceux où Q'=3 ou 4, il existe un risque de voir une très forte propagation des agents corrosifs entre les Q'=3 ou 4 fils internes qui délimitent un capillaire central très favorable à leur propagation le long du toron, lorsque le toron est insuffisamment pénétré. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Avantageusement, la somme SI2' des distances interfils de la couche intermédiaire est telle que SI2' < d3' avec d3' étant le diamètre de chaque fil externe de chaque toron externe, de préférence SI2' ≤ 0,8 x d3'. La somme SI2' est la somme des distances interfils séparant chaque couple de fils adjacents de la couche intermédiaire. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2' par le nombre d'espaces séparant les fils de la couche intermédiaire. Le diamètre d3' des fils externes de la couche externe de chaque toron externe étant préférentiellement supérieur à la somme SI2', on empêche les fils externes de pénétrer dans la couche intermédiaire. On assure ainsi une bonne stabilité architecturale, ce qui réduit de plus le risque de modification des fenêtres de passage radial de la composition d'élastomère et donc le risque de dégrader de la bonne pénétrabilité de chaque toron externe.

De façon avantageuse, la couche intermédiaire de chaque toron externe est désaturée.

Par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe pas suffisamment d'espace entre les fils de la couche de façon à permettre le passage d'une composition d'élastomère, par exemple car les fils de la couche se touchent deux à deux.

Avantageusement, la distance interfils de la couche intermédiaire de chaque toron externe est supérieure ou égale à 5 µm. De préférence, la distance interfils de la couche intermédiaire de chaque toron externe est supérieure ou égale à 15 µm, plus préférentiellement supérieure ou égale à 35 µm, encore plus préférentiellement supérieure ou égale à 50 µm et très préférentiellement supérieure ou égale à 60 µm.

La désaturation de la couche intermédiaire de chaque toron externe permet avantageusement de faciliter le passage de la composition d'élastomère jusqu'au centre de chaque toron externe et donc de rendre le toron externe moins sensible à la corrosion.

Dans un mode de réalisation favorisant le compromis entre pénétrabilité de chaque toron externe et force à rupture, la couche intermédiaire de chaque toron externe est incomplètement insaturée.

Par définition, une couche incomplètement insaturée fils est telle qu'il n'existe pas suffisamment de place dans cette couche pour y ajouter au moins un (X'+1)^{ième} fil du même diamètre que les X' fils de la couche. En l'espèce, il n'existe pas suffisamment de place dans la couche intermédiaire pour y ajouter au moins un (M'+1)^{ième}fil intermédiaire du même diamètre que les M' fils intermédiaires de la couche intermédiaire. En d'autres termes par couche intermédiaire de toron externe incomplétement insaturée, on entend que la somme SI2' des distances interfils I2' de la couche intermédiaire est inférieure au diamètre d2' des fils intermédiaires de la couche intermédiaire. Ainsi, avantageusement, la somme SI2' des distances interfils de la couche intermédiaire de chaque toron externe est telle que SI2' < d2'.

L'insaturation incomplète de la couche intermédiaire de chaque toron externe permet d'assurer une stabilité architecturale de la couche intermédiaire. On réduit ainsi le risque de voir un fil externe venir pénétrer la couche intermédiaire, ce qui modifierait les fenêtres de passage radial de la composition d'élastomère et donc dégraderait la bonne pénétrabilité de chaque toron externe. En outre, l'insaturation incomplète de la couche intermédiaire de chaque toron externe permet de s'assurer que chaque toron externe comprend un nombre relativement élevé de fils intermédiaires et donc présente une force à rupture relativement élevée.

Dans un autre mode de réalisation favorisant la pénétrabilité de chaque toron externe, la couche intermédiaire de chaque toron externe est complètement insaturée.

Par définition, une couche complètement insaturée de fils est telle qu'il existe suffisamment de place dans cette couche pour y ajouter au moins un (X'+1)^{ieme} fil du même diamètre que les X' fils de la couche, plusieurs fils pouvant alors être ou non au contact les uns des autres. En l'espèce, il existe suffisamment de place dans la couche intermédiaire de chaque toron externe pour y ajouter au moins un (M'+1)^{ième} fil intermédiaire du même diamètre que les M' fils intermédiaire de la couche intermédiaire. En d'autres termes par couche intermédiaire de toron externe complétement insaturée, on entend que la somme SI2' des distances interfils I2' de la couche intermédiaire est supérieure ou égale au diamètre d2' des fils intermédiaires de la couche intermédiaire. Ainsi, avantageusement, la somme SI2' des distances interfils de la couche intermédiaire de chaque toron externe est telle que SI2' ≥ d2'.

De façon avantageuse, la couche externe de chaque toron externe est désaturée, de préférence complètement insaturée. De façon analogue à la couche intermédiaire, la désaturation de la couche externe de chaque toron externe permet avantageusement de faciliter le passage de la composition d'élastomère dans et au travers de chaque toron externe et donc de rendre chaque toron externe moins sensible à la corrosion.

Avantageusement, la distance interfils de la couche externe de chaque toron externe est supérieure ou égale à 5 µm. De préférence, la distance interfils de la couche externe de chaque toron externe est supérieure ou égale à 15 µm, plus préférentiellement supérieure ou égale à 35 µm, encore plus préférentiellement supérieure ou égale à 50 µm et très préférentiellement supérieure ou égale à 60 µm.

Par définition, une couche complètement insaturée de fils est telle qu'il existe suffisamment de place dans cette couche pour y ajouter au moins un (X'+1)^{ième} fil du même diamètre que les X' fils de la couche, plusieurs fils pouvant alors être ou non au contact les uns des autres. En l'espèce, il existe suffisamment de place dans la couche externe de chaque toron externe pour y ajouter au moins un (N'+1)^{ième} fil externe du même diamètre que les N' fils externe de la couche externe. En d'autres termes par couche externe de toron externe complétement insaturée, on entend que la somme SI3' des distances interfils I3' de la couche externe est supérieure ou égale au diamètre d3' des fils externes de la couche externe. Ainsi, avantageusement, la somme SI3' des distances interfils de la couche externe de chaque toron externe est telle que SI3' ≥ d3'. La somme SI3' est la somme des distances interfils séparant chaque couple de fils adjacents de la couche externe. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI3' par le nombre d'espaces séparant les fils de la couche externe.

L'insaturation complète de la couche externe de chaque toron externe permet de maximiser la pénétration de la composition d'élastomère dans chaque toron externe et donc de rendre chaque toron externe encore moins sensible à la corrosion.

Dans des modes de réalisation préférés, chaque fil interne de chaque toron externe présente un diamètre d1' supérieur ou égal au diamètre d2' de chaque fil intermédiaire de chaque toron externe et très préférentiellement 1≤d1'/d2'≤1,10. L'utilisation de diamètres tels que d1'>d2' permet de favoriser la pénétrabilité de la composition d'élastomère au travers de la couche intermédiaire. Lorsque d1'>d2', on a très préférentiellement d1'/d2'≤1,10 ce qui permet d'une part, de maîtriser la stabilité architecturale de la couche intermédiaire et, d'autre part, de rendre la présente invention d'un intérêt encore plus important du fait de la désaturation relativement faible créée par la différence entre d1' et d2'. L'utilisation de diamètres tels que d1'=d2' permet de limiter le nombre de fils différents à gérer lors de la fabrication du câble mais également de rendre la présente invention d'un intérêt encore plus important du fait du manque de désaturation créé par l'égalité entre d1' et d2'.

Dans des modes de réalisation préférés, chaque fil interne de chaque toron externe présente un diamètre d1' supérieur ou égal au diamètre d3' de chaque fil externe de chaque toron externe et très préférentiellement 1≤d1'/d3'≤1,10. L'utilisation de diamètres tels que d1'>d3' permet de favoriser la pénétrabilité de la composition d'élastomère au travers de la couche externe. Lorsque d1'>d3', on a très préférentiellement d1'/d3'≤1,10 ce qui permet d'une part, de maîtriser la stabilité architecturale de la couche externe et, d'autre part, de rendre la présente invention d'un intérêt encore plus important du fait de la désaturation relativement faible créée par la différence entre d1' et d3'. L'utilisation de diamètres tels que d1'=d3' permet de limiter le nombre de fils différents à gérer lors de la fabrication du câble mais également de rendre la présente invention d'un intérêt encore plus important du fait du manque de désaturation créé par l'égalité entre d1' et d3'.

Dans des modes de réalisation préférés, chaque fil intermédiaire de chaque toron externe présente un diamètre d2' égal au diamètre d3' de chaque fil externe de chaque toron externe. L'utilisation de diamètres tels que d2'=d3' permet de limiter le nombre de fils différents à gérer lors de la fabrication du câble.

Avantageusement, chaque toron externe est du type non gommé in situ. Par non gommé in situ, on entend qu'avant assemblage de la couche externe du câble et avant assemblage du câble, chaque toron externe est constitué des fils des différentes couches et dépourvu de composition de polymère, notamment de composition d'élastomère.

### Torons internes du câble selon l'invention

De façon avantageuse, la couche externe de chaque toron interne est désaturée, de préférence complètement insaturée. La désaturation de la couche externe de chaque toron interne permet avantageusement de faciliter le passage de la composition d'élastomère jusqu'au centre de chaque toron interne et donc de rendre chaque toron interne moins sensible à la corrosion.

Avantageusement, la distance interfils de la couche externe de chaque toron interne est supérieure ou égale à 5 µm. De préférence, la distance interfils de la couche externe de chaque toron interne est supérieure ou égale à 15 µm, plus préférentiellement supérieure ou égale à 35 µm, encore plus préférentiellement supérieure ou égale à 50 µm et très préférentiellement supérieure ou égale à 60 µm.

La couche externe de chaque toron interne est préférentiellement complètement insaturée.

Par définition, une couche complètement insaturée de fils est telle qu'il existe suffisamment de place dans cette couche pour y ajouter au moins un (X+1)^{ième} fil du même diamètre que les X fils de la couche, plusieurs fils pouvant alors être ou non au contact les uns des autres. En l'espèce, il existe suffisamment de place dans la couche externe pour y ajouter au moins un (N+1)^{ième} fil du même diamètre que les N fils de la couche externe. En d'autres termes par couche externe de toron interne complétement insaturée, on entend que la somme SI3 des distances interfils I3 de la couche externe est supérieure ou égale au diamètre d3 des fils externes de la couche externe. Ainsi, avantageusement, la somme SI3 des distances interfils de la couche externe de chaque toron interne est telle que SI3 ≥ d3. La somme SI3 est la somme des distances interfils séparant chaque couple de fils adjacents de la couche externe. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI3 par le nombre d'espaces séparant les fils de la couche externe.

L'insaturation complète de la couche externe de chaque toron interne permet de maximiser la pénétration de la composition d'élastomère dans chaque toron interne et donc de rendre chaque toron interne encore moins sensible à la corrosion.

Dans des modes de réalisation préférés, chaque fil interne de chaque toron interne présente un diamètre d1 supérieur ou égal au diamètre d3 de chaque fil externe de chaque toron interne et très préférentiellement 1≤d1/d3≤1,10. L'utilisation de diamètres tels que d1>d3 permet de favoriser la pénétrabilité de la composition d'élastomère au travers de la couche externe. Lorsque d1>d3, on a très préférentiellement d1/d3≤1,10 ce qui permet d'une part, de maîtriser la stabilité architecturale de la couche externe et, d'autre part, de rendre la bonne pénétrabilité de chaque toron interne d'un intérêt encore plus important du fait de la désaturation relativement faible créée par la différence entre d1 et d3. L'utilisation de diamètres tels que d1=d3 permet de limiter le nombre de fils différents à gérer lors de la fabrication du câble mais également de rendre la présente invention d'un intérêt encore plus important du fait du manque de désaturation créé par l'égalité entre entre d1 et d3.

Dans un mode de réalisation, chaque toron interne est du type gommé in situ. Un tel toron comprend, avant assemblage du câble, une couche d'une composition de polymère, notamment une composition d'élastomère agencée entre au moins deux couches de fils radialement adjacentes, éventuellement entre chaque couche de fils radialement adjacentes. Un tel toron gommé in situ est notamment décrit dans WO2010054790.

Dans un autre mode de réalisation, chaque toron interne est du type non gommé in situ. Par non gommé in situ, on entend qu'avant assemblage du câble, chaque toron interne est constitué des fils des différentes couches et dépourvu de composition de polymère, notamment de composition d'élastomère.

### Torons internes à deux couches

Dans un mode de réalisation favorisant le compromis entre diamètre du câble et force à rupture, chaque toron interne est à deux couches. Dans ce mode de réalisation, la couche externe de chaque toron interne est enroulée autour de la couche interne de chaque toron interne au contact de la couche interne de chaque toron interne. Dans ce mode de réalisation, chaque toron interne comprend un assemblage de fils constitué de deux couches de fils, ni plus ni moins, c'est-à-dire que l'assemblage de fils a deux couches de fils, pas une, pas trois, mais uniquement deux.

Dans des modes de réalisation préférés, Q=1, 2, 3 ou 4.

Dans un mode de réalisation, Q=1, N=5 ou 6, de préférence Q=1, N=6.

Dans des modes de réalisation préférés permettant d'augmenter la force à rupture du câble par rapport au mode de réalisation dans lequel Q=1, Q=2, 3 ou 4, de préférence Q=3 ou 4. Contrairement au mode de réalisation dans lequel Q=1 et dans lequel il existe un risque de voir, sous l'effet des efforts répétés de compression appliqués au câble, le fil interne de chaque toron interne sortir radialement de chaque toron interne et même du câble, la présence de plusieurs fils dans la couche interne chaque toron interne (Q>1), permet de réduire ce risque, les efforts de compression étant alors répartis sur la pluralité de fils de la couche interne.

Dans ces modes de réalisation dans lesquels Q>1, on a avantageusement un toron interne à couches cylindriques, c'est-à-dire dans lequel les Q fils internes enroulés selon un pas p1 et dans un sens de couche interne de chaque toron interne et les N fils externes sont enroulés autour de la couche intermédiaire selon un pas p3 et dans un sens de couche externe de chaque toron interne, p1 étant différent de p3 et/ou le sens de couche interne de chaque toron interne étant différent du sens de couche externe de chaque toron interne.

Dans ces modes de réalisation préférés dans lesquels Q>1, notamment ceux où Q=3 ou 4, il existe un risque, lorsque le toron est insuffisamment pénétré, de voir une très forte propagation des agents corrosifs entre les Q=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés dans lesquels Q>1, N=7, 8, 9 ou 10, de préférence N=8, 9 ou 10 et plus préférentiellement N=8 ou 9.

Dans une première variante, Q=2 et N=7 ou 8, de préférence Q=2, N=7.

Dans une deuxième variante, Q=3 et N=7, 8 ou 9, de préférence Q=3, N=8.

Dans une troisième variante, Q=4 et N=7, 8, 9 ou 10, de préférence Q=4, N=9.

Avantageusement, la couche interne du câble est enroulée dans un sens de couche interne du câble et chaque couche interne (lorsque Q>1), intermédiaire et externe de chaque toron interne est enroulée dans le même sens d'enroulement que le sens de couche interne du câble.

Avantageusement, la couche externe du câble est enroulée dans un sens de couche externe du câble et chaque couche intermédiaire et externe de chaque toron externe est enroulée dans le même sens d'enroulement que le sens de couche externe du câble.

Dans un mode de réalisation, le sens de couche interne du câble et le sens de couche externe du câble sont les mêmes. Dans ce mode de réalisation, la fabrication est relativement aisée car il n'est pas nécessaire contrairement au mode de réalisation précédent de différencier les sens d'enroulement entre les couches interne et externe du câble. Néanmoins, les contacts entre les fils externes des couches externes des torons internes et externes sont relativement longs ce qui peut, dans certains combinaisons de pas, diamètres et architectures de câbles, générer des défauts d'assemblage dus, par exemple, à un glissement non désiré des torons externes dans les gorges formées entre les torons internes.

Dans un autre mode de réalisation, le sens de couche interne du câble et le sens de couche externe du câble sont opposés. Dans ce mode de réalisation, on réduit le risque d'éventuels glissements non désirés des torons externes dans des gorges formées entre les torons internes du fait d'un croisement entre les torons internes et externes.

### Torons internes à trois couches

Dans un autre mode de réalisation particulièrement avantageux améliorant la force à rupture du câble, chaque toron interne est à trois couches et comprend :
- une couche interne constituée de Q≥1 fils internes,
- une couche intermédiaire constituée de M>1 fils intermédiaires enroulés autour de la couche interne, et
- une couche externe constituée de N>1 fils externes enroulés autour de la couche intermédiaire.

Dans ce mode de réalisation, la couche externe de chaque toron interne est enroulée autour de la couche intermédiaire de chaque toron interne au contact de la couche intermédiaire de chaque toron interne et la couche intermédiaire de chaque toron interne est enroulée autour de la couche interne de chaque toron interne au contact de la couche interne de chaque toron interne. Dans ce mode de réalisation, chaque toron interne comprend un assemblage de fils constitué de trois couches de fils, ni plus ni moins, c'est-à-dire que l'assemblage de fils a trois couches de fils, pas deux, pas quatre, mais uniquement trois.

Dans des modes de réalisation préférés, Q=1, 2, 3 ou 4.

Dans des modes de réalisation, Q=1. Dans le mode de réalisation où Q=1 et lorsque le câble est, contrairement à celui de l'invention, insuffisamment pénétré, il existe un risque de voir, sous l'effet des efforts répétés de compression appliqués au câble, le fil interne de chaque toron interne sortir radialement de chaque toron interne et même du câble. Grâce à l'invention, chaque toron interne étant excellemment bien pénétré et malgré Q=1, la composition d'élastomère agit comme un couche de frettage autour de chaque toron interne, notamment autour des couches externe et intermédiaire de chaque toron interne empêchant la sortie du fil interne même sous des efforts répétés de compression.

Dans ces modes de réalisation dans lesquels Q=1, on a avantageusement un toron interne à couches cylindriques, c'est-à-dire dans lequel les M fils intermédiaires sont enroulés autour de la couche interne selon un pas p2 et dans un sens de couche intermédiaire de chaque toron interne et les N fils externes sont enroulés autour de la couche intermédiaire selon un pas p3 et dans un sens de couche externe de chaque toron interne, on a p2 différent de p3 et/ou le sens de couche intermédiaire de chaque toron interne différent du sens de couche externe de chaque toron interne.

Dans un mode de réalisation, Q=1, M=5 ou 6 et N=10, 11 ou 12, de préférence Q=1, M=5 ou 6 et N=10 ou 11 et plus préférentiellement Q=1, M=6 et N=11.

Dans des modes de réalisation préférés permettant d'augmenter la force à rupture du câble par rapport au mode de réalisation dans lequel Q=1, Q=2, 3 ou 4, de préférence Q=3 ou 4.

Dans ces modes de réalisation dans lesquels Q>1, on a avantageusement un toron interne à couches cylindriques, c'est-à-dire dans lequel les Q fils internes sont enroulés selon un pas p1 et dans un sens de couche interne de chaque toron interne, les M fils intermédiaires sont enroulés autour de la couche interne selon un pas p2 et dans un sens de couche intermédiaire de chaque toron interne, les N fils externes sont enroulés autour de la couche intermédiaire selon un pas p3 et dans un sens de couche externe de chaque toron interne, on a p1, p2 et p3 différents deux à deux et/ou les sens des couches adjacentes de chaque toron interne sont différents.

De préférence, on a également, les M fils intermédiaires enroulés autour de la couche interne selon un pas p2 et les N fils externes enroulés autour de la couche intermédiaire selon un pas p3, les pas p2 et p3 vérifiant :
- 0,33 ≤ (p3-p2)/p3 ≤ 0,45 dans le cas où Q=2,
- 0,35 ≤ (p3-p2)/p3 ≤ 0,42 dans le cas où Q=3,
- 0,28 ≤ (p3-p2)/p3 ≤ 0,43 dans le cas où Q=4.

Un tel rapport (p3-p2)/p3 permet d'obtenir des fenêtres de passage radial pour la composition d'élastomère relativement grandes au sein de chaque toron interne.

Avantageusement, les pas p2 et p3 vérifient :
- 0,36 ≤ (p3-p2)/p3, de préférence 0,38 ≤ (p3-p2)/p3 dans le cas où Q=2,
- 0,36 ≤ (p3-p2)/p3, de préférence 0,38 ≤ (p3-p2)/p3 dans le cas où Q=3,
- 0,32 ≤ (p3-p2)/p3, de préférence 0,36 ≤ (p3-p2)/p3 dans le cas où Q=4.

D'une façon analogue aux torons externes, plus le rapport (p3-p2)/p3 est important, autrement dit plus la différence entre p3 et p2 est importante, meilleure est la stabilité architecturale de chaque toron interne.

Avantageusement, les pas p2 et p3 vérifient :
- (p3-p2)/p3 ≤ 0,42 et de préférence (p3-p2)/p3 ≤ 0,40 dans le cas où Q=2,
- (p3-p2)/p3 ≤ 0,40 dans le cas où Q=3,
- (p3-p2)/p3 ≤ 0,40 et de préférence (p3-p2)/p3 ≤ 0,38 dans le cas où Q=4.

En dessous de ces valeurs, la dimension des fenêtres de passage radial de la composition d'élastomère est maximale et permet d'optimiser la pénétrabilité de chaque toron interne.

De façon avantageuse, le pas p1 est tel que 3 mm ≤ p1 ≤ 16 mm, de préférence 4 mm ≤ p1 ≤ 13 mm et plus préférentiellement 5 mm ≤ p1 ≤ 10 mm.

De façon avantageuse, le pas p2 est tel que 8 mm ≤ p2 ≤ 20 mm, de préférence 9 mm ≤ p2 ≤ 18 mm et plus préférentiellement 10 mm ≤ p2 ≤ 16 mm.

De façon avantageuse, le pas p3 est tel que 10 mm ≤ p3 ≤ 40 mm, de préférence 12 mm ≤ p3 ≤ 30 mm et plus préférentiellement 15 mm ≤ p3 ≤ 25 mm.

Des pas p1, p2 et p3 dans ces plages préférentielles permettent d'obtenir un câble présentant des propriétés mécaniques compatibles avec un usage pneumatique, un coût et une masse linéique du câble relativement faible.

Dans ces modes de réalisation préférés dans lesquels Q>1, notamment ceux où Q=3 ou 4, il existe un risque, lorsque le toron est insuffisamment pénétré, de voir une très forte propagation des agents corrosifs entre les Q=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés dans lesquels Q>1, Q=2, 3 ou 4, M=7, 8, 9 ou 10, N=13, 14 ou 15, de préférence Q=3 ou 4, M=8, 9 ou 10, N=14 ou 15, plus préférentiellement Q=3, M=8 ou 9 et N=14 ou 15 et encore plus préférentiellement Q=3, M=9 et N=15.

Avantageusement, la somme SI2 des distances interfils de la couche intermédiaire est telle que SI2 < d3 avec d3 étant le diamètre de chaque fil externe de chaque toron interne, de préférence SI2 ≤ 0,8 x d3. De façon analogue au toron externe, le diamètre d3 des fils externes de la couche externe de chaque toron interne étant préférentiellement supérieur à la somme SI2, on empêche les fils externes de pénétrer dans la couche intermédiaire. On assure ainsi une bonne stabilité architecturale, ce qui réduit le risque de modification des fenêtres de passage radial de la composition d'élastomère et donc le risque de dégrader de la bonne pénétrabilité de chaque toron interne. La somme SI2 est la somme des distances interfils séparant chaque couple de fils adjacents de la couche intermédiaire. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche intermédiaire.

De façon avantageuse, la couche intermédiaire de chaque toron interne est désaturée.

Avantageusement, la distance interfils de la couche intermédiaire de chaque toron interne est supérieure ou égale à 5 µm. De préférence, la distance interfils de la couche intermédiaire de chaque toron interne est supérieure ou égale à 15 µm, plus préférentiellement supérieure ou égale à 35 µm, encore plus préférentiellement supérieure ou égale à 50 µm et très préférentiellement supérieure ou égale à 60 µm.

La désaturation de la couche intermédiaire de chaque toron interne permet avantageusement de faciliter le passage de la composition d'élastomère jusqu'au centre de chaque toron interne et donc de rendre chaque toron interne moins sensible à la corrosion.

Dans un mode de réalisation favorisant le compromis entre pénétrabilité de chaque toron interne et force à rupture, la couche intermédiaire de chaque toron interne est incomplètement insaturée.

Par définition, une couche incomplètement insaturée de fils est telle qu'il n'existe pas suffisamment de place dans cette couche pour y ajouter au moins un (X+1)^{ième} fil du même diamètre que les X fils de la couche. En l'espèce, il n'existe pas suffisamment de place dans la couche intermédiaire pour y ajouter au moins un (M+1)^{ième} fil intermédiaire du même diamètre que les M fils intermédiaires de la couche intermédiaire. En d'autres termes par couche intermédiaire de toron interne incomplétement insaturée, on entend que la somme SI2 des distances interfils I2 de la couche intermédiaire est inférieure au diamètre d2 des fils intermédiaires de la couche intermédiaire. Ainsi, avantageusement, la somme SI2 des distances interfils de la couche intermédiaire de chaque toron interne est telle que SI2 < d2.

L'insaturation incomplète de la couche intermédiaire de chaque toron interne permet d'assurer une stabilité architecturale de la couche intermédiaire. En outre, l'insaturation incomplète de la couche intermédiaire de chaque toron interne permet de s'assurer que chaque toron interne comprend un nombre relativement élevé de fils intermédiaires et donc présente une force à rupture relativement élevée.

Dans un autre mode de réalisation favorisant la pénétrabilité de chaque toron interne, la couche intermédiaire de chaque toron interne est complètement insaturée.

Par définition, une couche complètement insaturée de fils est telle qu'il existe suffisamment de place dans cette couche pour y ajouter au moins un (X+1)^{ième} fil du même diamètre que les X fils de la couche, plusieurs fils pouvant alors être ou non au contact les uns des autres. En l'espèce, il existe suffisamment de place dans la couche intermédiaire de chaque toron interne pour y ajouter au moins un (M+1)^{ième} fil intermédiaire du même diamètre que les M fils intermédiaires de la couche intermédiaire. En d'autres termes par couche intermédiaire de toron interne complétement insaturée, on entend que la somme SI2 des distances interfils I2 de la couche intermédiaire est supérieure ou égale au diamètre d2 des fils intermédiaires de la couche intermédiaire. Ainsi, avantageusement, la somme SI2 des distances interfils de la couche intermédiaire de chaque toron interne est telle que SI2 ≥ d2.

Dans des modes de réalisation préférés, chaque fil interne de chaque toron interne présente un diamètre d1 supérieur ou égal au diamètre d2 de chaque fil intermédiaire de chaque toron interne et très préférentiellement 1≤d1/d2≤1,10. L'utilisation de diamètres tels que d1>d2 permet de favoriser la pénétrabilité de la composition d'élastomère au travers de la couche intermédiaire. Lorsque d1>d2, on a très préférentiellement d1/d2≤1,10 ce qui permet d'une part, de maîtriser la stabilité architecturale de la couche intermédiaire et, d'autre part, de rendre la bonne pénétrabilité de chaque toron interne d'un intérêt encore plus important du fait de la désaturation relativement faible créée par la différence entre d1 et d2. L'utilisation de diamètres tels que d1=d2 permet de limiter le nombre de fils différents à gérer lors de la fabrication du câble mais également de rendre la présente invention d'un intérêt encore plus important du fait du manque de désaturation créé par l'égalité entre d1 et d2.

Dans des modes de réalisation préférés, chaque fil intermédiaire de chaque toron interne présente un diamètre d2 égal au diamètre d3 de chaque fil externe de chaque toron interne. L'utilisation de diamètres tels que d2=d3 permet de limiter le nombre de fils différents à gérer lors de la fabrication du câble.

Dans un mode de réalisation, chaque toron interne est du type gommé in situ. Chaque toron comprend, avant assemblage du câble, une couche d'une composition de polymère, notamment une composition d'élastomère agencée entre au moins deux couches de fils radialement adjacentes, éventuellement entre chaque couche de fils radialement adjacentes. Un tel toron gommé in situ est notamment décrit dans WO2010054790.

Dans un autre mode de réalisation, chaque toron interne est du type non gommé in situ. Par non gommé in situ, on entend qu'avant assemblage du câble, chaque toron interne est constitué des fils des différentes couches et dépourvu de composition de polymère, notamment de composition d'élastomère.

### PNEUMATIQUE SELON L'INVENTION

Un autre objet de l'invention est un pneumatique comprenant un câble tel que défini ci-dessus.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Le pneumatique présente une dimension de type W R U dans laquelle, de façon connue pour l'homme du métier, W, désigne :
- le rapport nominal d'aspect H/B tel que défini par l'ETRTO, lorsqu'il est sous la forme H/B, H étant la hauteur de la section du pneumatique et B étant la largeur de la section du pneumatique,
- H.00 ou B.00, lorsqu'il est sous la forme H.00 ou B.00, dans lequel H=B, H et B étant tels que définis ci-dessus,

U représente le diamètre, en pouces, du siège de la jante sur laquelle le pneumatique est destiné à être monté, R désigne le type d'armature de carcasse du pneumatique, ici radiale.
Des exemples de telles dimensions sont par exemple 40.00 R 57 ou encore 59/80 R 63.

On a de préférence U≥35, plus préférentiellement U≥49 et plus préférentiellement U≥57.

Dans un mode de réalisation, le pneumatique comprend une armature de carcasse ancrée dans deux bourrelets et surmontée radialement par une armature de sommet elle-même surmontée d'une bande de roulement, l'armature de sommet étant réunie auxdits bourrelets par deux flancs, l'armature de carcasse comprenant au moins un câble tel que défini ci-dessus.

Dans un autre mode de réalisation, le pneumatique comprend une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

De façon avantageuse, l'armature de carcasse comprend au moins une nappe de carcasse comprenant des éléments filaires de renfort métalliques de carcasse, chaque élément filaire de renfort métallique de carcasse faisant un angle compris entre 80° et 90° avec la direction circonférentielle du pneumatique.

Avantageusement, l'armature de sommet comprend une armature de travail comprenant au moins un câble tel que défini ci-dessus.

Avantageusement, l'armature de travail comprend au moins une nappe de travail comprenant des éléments filaires de renfort métalliques de travail agencés les uns sensiblement parallèlement aux autres, chaque élément filaire de renfort métallique de travail faisant un angle au plus égal à 60°, de préférence allant de 15° à 40° avec la direction circonférentielle du pneumatique et étant formé par un câble tel que défini ci-dessus.

Dans un mode de réalisation avantageux, l'armature de travail comprend au moins des première et deuxième nappes de travail, chaque première et deuxième nappe de travail comprenant respectivement des premiers et deuxièmes éléments filaires de renfort métalliques de travail agencés les uns sensiblement parallèlement aux autres dans chaque première et deuxième nappe de travail, chaque premier et deuxième élément filaire de renfort métallique de travail faisant un angle au plus égal à 60°, de préférence allant de 15° à 40° avec la direction circonférentielle du pneumatique et étant formé par un câble tel que défini ci-dessus.

Avantageusement, l'armature de sommet comprend une armature de protection comprenant au moins une nappe de protection comprenant des éléments filaires de renfort métalliques de protection agencés les uns sensiblement parallèlement aux autres, chaque élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation avantageux, l'armature de protection comprend des première et deuxième nappes de protection, chaque première et deuxième nappes de protection comprenant respectivement des premiers et deuxièmes éléments filaires de renfort métalliques de protection agencés les uns sensiblement parallèlement aux autres dans chaque première et deuxième nappe de protection, chaque premier et deuxième élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation préférentiel, l'armature de protection est radialement intercalée entre la bande de roulement et l'armature de travail.

Avantageusement, l'armature de sommet comprend une armature additionnelle comprenant au moins une nappe additionnelle comprenant des éléments filaires de renfort métalliques additionnels agencés les uns sensiblement parallèlement aux autres dans la nappe additionnelle, chaque élément filaire de renfort métallique additionnel faisant un angle au plus égal à 10°, de préférence allant de 5° à 10° avec la direction circonférentielle du pneumatique.

Dans un mode de réalisation avantageux, l'armature additionnelle comprend des première et deuxième nappes additionnelles, chaque première et deuxième nappes additionnelle comprenant respectivement des premiers et deuxièmes éléments filaires de renfort métalliques additionnels agencés les uns sensiblement parallèlement aux autres dans chaque première et deuxième nappe additionnelle, chaque premier et deuxième élément filaire de renfort métallique additionnel faisant un angle au plus égal à 10°, de préférence allant de 5° à 10° avec la direction circonférentielle du pneumatique.

L'invention sera mieux comprise à la lecture de la description qui va suivre, donnée uniquement à titre d'exemple non limitatif et faite en se référant aux dessins dans lesquels :
- la figure 1 est une vue en coupe perpendiculaire à la direction circonférentielle d'un pneumatique selon l'invention ;
- la figure 2 est une vue de détails de la zone II de la figure 1 ;
- les figures 3, 4 et 5 sont des vues schématiques en coupe perpendiculaire à l'axe du câble (supposé rectiligne et au repos) de câbles selon respectivement des premier, deuxième et troisième modes de réalisation de l'invention ;
- les figures 6, 7 et 8 sont des vues analogues à celles des figures 3, 4 et 5 de câbles selon respectivement des quatrième, cinquième et sixième modes de réalisation l'invention ;
- les figures 9, 10 et 11 sont des vues analogues à celles des figures 3, 4 et 5 de câbles selon respectivement des septième, huitième et neuvième modes de réalisation l'invention ;
- les figures 12, 13 et 14 sont des vues analogues à celles des figures 3, 4 et 5 de câbles selon respectivement des dixième, onzième et douzième modes de réalisation l'invention ;
- les figures 15, 16 et 17 sont des vues analogues à celles des figures 3, 4 et 5 de câbles selon respectivement des treizième, quatorzième et quinzième modes de réalisation l'invention ;
- la figure 18 est une vue schématique en projection sur un plan comprenant l'axe d'un toron externe avant assemblage du câble selon le premier mode de réalisation de l'invention ; et
- la figure 19 est une vue de détails de la zone XVIII représentant une fenêtre de passage radial délimitée par des fils d'une couche intermédiaire et des fils d'une couche externe du toron externe de la figure 18.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLE DE PNEUMATIQUE SELON L'INVENTION

Dans les figures, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet et passe par le milieu de l'armature de sommet.

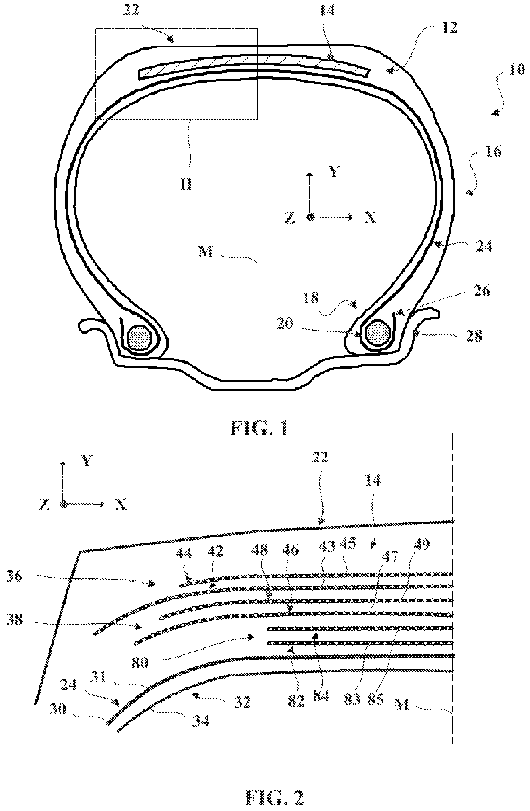

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 comprenant des éléments filaires de renfort métalliques de carcasse 31 et s'étendant d'un bourrelet 18 à l'autre de manière à faire un angle compris entre 80° et 90° avec la direction circonférentielle Z du pneumatique 10.

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 80 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 80.

L'armature de protection 36 comprend des première et deuxième nappes de protection 42, 44, la première nappe 42 étant agencée radialement à l'intérieur de la deuxième nappe 44. Chaque première et deuxième nappes de protection 42, 44 comprend respectivement des premiers et deuxièmes éléments filaires de renfort métalliques de protection 43, 45 agencés les uns sensiblement parallèlement aux autres dans chaque première et deuxième nappe de protection 42, 44. Chaque premier et deuxième élément filaire de renfort métallique de protection 43, 45 fait un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque première et deuxième nappe de travail 46, 48 comprend respectivement des premiers et deuxièmes éléments filaires de renfort métalliques de travail 47, 49 agencés les uns sensiblement parallèlement aux autres dans chaque première et deuxième nappe de travail 46, 48. Chaque premier et deuxième élément filaire de renfort métallique de travail 47, 49 fait un angle au plus égal à 60°, de préférence allant de 15° à 40° avec la direction circonférentielle Z du pneumatique 10. De façon optionnelle, les premiers et deuxièmes éléments filaires de renfort métalliques de travail 47, 49 sont croisés d'une nappe de travail à l'autre.

L'armature additionnelle 80, également appelée bloc limiteur, dont la fonction est de reprendre en partie les sollicitations mécaniques de gonflage, comprend des première et deuxième nappes additionnelles 82, 84, chaque première et deuxième nappes additionnelle 82, 84 comprenant respectivement des premiers et deuxièmes éléments filaires de renfort métalliques additionnels 83, 85 agencés les uns sensiblement parallèlement aux autres dans chaque première et deuxième nappe additionnelle 82, 84. Chaque premier et deuxième élément filaire de renfort métallique additionnel 83, 85 fait un angle au plus égal à 10°, de préférence allant de 5° à 10° avec la direction circonférentielle Z du pneumatique 10. Les éléments filaire de renfort métalliques additionnels sont par exemple tels que décrits dans FR 2 419 181 ou FR 2 419 182.

Dans un mode de réalisation, chaque premier et deuxième élément filaire de renfort métallique de travail 47, 49 est formé par un câble conforme à l'invention, par exemple le câble 50 décrit ci-après.

Dans un autre mode de réalisation, chaque élément filaire de renfort métallique de carcasse 31 formé par un câble conforme à l'invention, par exemple le câble 50 décrit ci-après.

Dans encore un autre mode de réalisation, chaque premier et deuxième élément filaire de renfort métallique de travail 47, 49 et chaque élément filaire de renfort métallique de carcasse 31 est formé par un câble conforme à l'invention, ces câbles pouvant être identiques ou différents selon qu'il s'agit des éléments filaires de renfort métallique 31, 47 ou 49.

### CABLE SELON UN PREMIER MODE DE REALISATION DE L'INVENTION

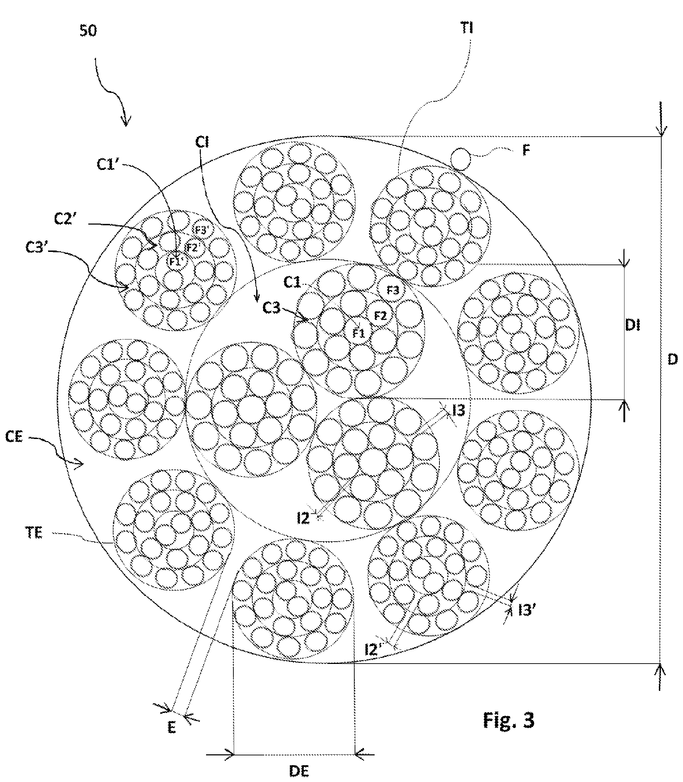

On a représenté sur la figure 3 le câble 50 selon un premier mode de réalisation de l'invention.

Le câble 50 est métallique et est du type multi-torons à deux couches cylindriques. Ainsi, on comprend que les couches de torons constituant le câble 50 sont au nombre de deux, ni plus, ni moins. Les couches de torons sont adjacentes et concentriques. Le câble 50 est dépourvu de composition polymérique et de composition d'élastomère lorsqu'il n'est pas intégré au pneumatique.

Le câble 50 comprend une couche interne CI du câble 50 ainsi qu'une couche externe CE du câble 50. La couche interne CI est constituée de K>1 torons internes TI enroulés en hélice. En l'espèce, K=2, 3 ou 4, de préférence K=3 ou 4 et ici K=3. La couche externe CE est constituée de L>1 torons externes TE enroulés autour de la couche interne CI du câble. En l'espèce, L=7, 8, 9 ou 10, de préférence L=8, 9 ou 10 et plus préférentiellement L=8 ou 9 et en l'espèce L=9.

Le câble 50 comprend également une frette F constituée d'un unique fil de frette.

La couche interne CI du câble est enroulée en hélice selon un sens de couche interne du câble, ici Z, selon un pas pi et ici pi=80 mm et la couche externe CE est enroulée en hélice selon un sens de couche externe du câble, ici Z selon un pas pe et ici pe=100 mm. Comme pi est différent de pe, le câble est à couches cylindriques.

La frette F est enroulée autour de la couche externe CE selon un sens d'enroulement de la frette, ici opposé de la couche externe du câble, en l'espèce dans le sens S. Le fil de frette est enroulé en hélice autour des torons externes TE selon un pas pf tel que 2 mm ≤ pf ≤ 10 mm et de préférence 3 mm ≤ pf ≤ 8 mm. Ici pf=5,1 mm.

L'assemblage constitué par les couches interne CI et externe CE, c'est-à-dire le câble 50 sans la frette F, présente un diamètre D. Ici, D=7,0 mm.

La couche externe CE du câble 50 est désaturée. La distance E inter-torons moyenne séparant deux torons externes TE adjacents est supérieure ou égale supérieure ou égale à 70 µm, plus préférentiellement supérieure ou égale à 100 µm, encore plus préférentiellement supérieure ou égale à 150 µm et très préférentiellement supérieure ou égale à 200 µm. Dans ce mode de réalisation, la distance inter-torons de la couche externe de torons externes est supérieure ou égale à 200 µm. Ici, E=268 µm.

Chaque toron interne TI présente un diamètre DI et chaque toron externe TE présente un diamètre DE. En l'espèce, ici DI=1,78 mm et DE= 1,56 mm.

La couche externe CE du câble 50 est désaturée. En effet, SIE=9 x 0,268=2,4 mm, valeur supérieure à DE=1,56 mm.

### Torons internes TI du câble 50

Chaque toron interne TI est à au moins deux couches. En l'espèce, chaque toron interne TI est à trois couches. Chaque toron interne TI comprend, ici est constitué, de trois couches, pas plus, pas moins.

Chaque toron interne TI comprend une couche interne C1 constituée de Q fil(s) interne(s) F1, une couche intermédiaire C2 constituée de M fils intermédiaires F2 enroulés en hélice autour de la couche interne C1 et une couche externe C3 constituée de N fils externes F3 enroulés en hélice autour de la couche interne C1 et autour et au contact de la couche intermédiaire C2.

Q=1, 2, 3 ou 4 et plus préférentiellement ici Q=1.

Avec Q=1, M= 5 ou 6 et N=10, 11 ou 12, de préférence Q=1, M=5 ou 6 et N=10 ou 11 et ici Q=1, M=6 et N=11.

Le fil interne F1 présente un pas infini.

La couche intermédiaire C2 de chaque toron interne TI est enroulée autour de la couche interne C1 de chaque toron interne TI selon un sens d'enroulement Z. Les M fils intermédiaires F2 sont enroulés en hélice autour du fil interne F1 selon un pas p2 tel que 8 mm ≤ p2 ≤ 20 mm, de préférence 9 mm ≤ p2 ≤ 18 mm et plus préférentiellement 10 mm ≤ p2 ≤ 16 mm. Ici p2=14 mm.

La couche externe C3 de chaque toron interne TI est enroulée autour des couches interne C1 et intermédiaire C2 de chaque toron interne TI selon un sens d'enroulement Z. Les N fils externes F3 sont enroulés en hélice autour des M fils intermédiaires F2 selon un pas p3 tel que 10 mm ≤ p3 ≤ 40 mm, de préférence 12 mm ≤ p3 ≤ 30 mm, plus préférentiellement 15 mm ≤ p3 ≤ 25 mm. Ici p3=20 mm.

Comme p1 est différent de p2 et p2 est différent de p3, chaque toron interne est à couches cylindriques.

La couche intermédiaire C2 de chaque toron interne TI est désaturée et incomplètement insaturée. La distance interfils I2 de la couche intermédiaire C2 séparant en moyenne les M fils intermédiaires est avantageusement supérieure ou égale à 5 µm et ici égale à 11,6 µm. La couche intermédiaire C2 étant incomplétement insaturée, la somme SI2 des distances interfils I2 de la couche intermédiaire C2 est inférieure au diamètre d2 des fils intermédiaire F2 de la couche intermédiaire C2. Ici, la somme SI2=6 x 0,0116 = 0,07 mm, valeur strictement inférieure à d2=0,35 mm.

La somme SI2 des distances interfils I2 de la couche intermédiaire C2 est inférieure au diamètre d3 des fils externes F3 de la couche externe C3 et de préférence inférieur ou égal à 0,8 x d3. Ici, la somme SI2=6 x 0,0116=0,07 mm, valeur strictement inférieure à d3=0,35 mm.

La couche externe C3 de chaque toron interne TI est désaturée et complètement insaturée. La distance interfils I3 de la couche externe C3 séparant en moyenne les N fils externes est avantageusement supérieure ou égale à 5 µm, de préférence supérieure ou égale à 15 µm, plus préférentiellement supérieure ou égale à 35 µm et ici égale à 45 µm. La somme SI3 des distances interfils I3 de la couche externe C3 est supérieure au diamètre d3 des fils externes F3 de la couche externe C3. Ici, la somme SI3=11 x 0,045=0,50 mm, valeur strictement supérieure à d3=0,35 mm.

Chaque fil interne, intermédiaire et externe de chaque toron interne TI présente respectivement un diamètre d1, d2 et d3. Chaque diamètre des fils interne d1, intermédiaires d2 et externes d3 de chaque toron interne TI va de 0,15 mm à 0,60 mm, de préférence de 0,20 mm à 0,50 mm, plus préférentiellement de 0,22 mm à 0,40 mm et encore plus préférentiellement de 0,24 mm à 0,35 mm.

Le fil interne F1 de chaque toron interne TI présente un diamètre d1 supérieur ou égal au diamètre d2 de chaque fil intermédiaire F2 de chaque toron interne TI et très préférentiellement 1≤d1/d2≤1,10. Le fil interne F1 de chaque toron interne TI présente un diamètre d1 supérieur ou égal au diamètre d3 de chaque fil externe F3 de chaque toron interne TI et très préférentiellement 1≤d1/d3≤1,10. Chaque diamètre d2 de chaque fil intermédiaire F2 de chaque toron interne TI et chaque diamètre d3 de chaque fil externe F3 de chaque toron interne TI sont tels que d2=d3.

En l'espèce, d1>d2 et d1>d3, d1/d2=d1/d3=1,09 et d1=0,38 mm, d2=d3=0,35 mm.

### Torons externes TE du câble 50

Chaque toron externe TE est à trois couches. Ainsi, chaque toron externe TE comprend, ici est constitué, de trois couches, pas plus, pas moins.

Chaque toron externe TE comprend une couche interne C1' constituée de Q'=2, 3 ou 4 fils internes, une couche intermédiaire C2' constituée de M' fils intermédiaires F2' enroulés en hélice autour de la couche interne C1' et une couche externe C3' constituée de N' fils externes F3' enroulés en hélice autour de la couche interne C1' et autour et au contact de la couche intermédiaire C2'.

M'=7, 8, 9 ou 10, N'=12, 13, 14 ou 15 et ici Q'=2, M'=7 ou 8 et N'=12 ou 13. En l'espèce, le câble 50 est tel que Q'=2, M'=7 et N'=12.

La couche interne C1' de chaque toron externe TE est enroulée en hélice selon un sens d'enroulement Z. Les Q' fils internes F1' sont enroulés en hélice selon un pas p1' tel que 3 mm ≤ p1' ≤ 16 mm, de préférence 4 mm ≤ p1' ≤ 13 mm et plus préférentiellement 5 mm ≤ p1' ≤ 10 mm. Ici, p1'=6 mm.

La couche intermédiaire C2' de chaque toron externe TE est enroulée autour de la couche interne C1' de chaque toron externe TE selon un sens d'enroulement Z. Les M' fils intermédiaires F2' sont enroulés en hélice autour des fils internes F1' selon un pas p2' tel que 8 mm ≤ p2' ≤ 20 mm, de préférence 9 mm ≤ p2' ≤ 18 mm et plus préférentiellement 10 mm ≤ p2' ≤ 16 mm. Ici p2'=11 mm.

La couche externe C3' de chaque toron externe TE est enroulée autour de la couche intermédiaire C2' de chaque toron externe TE selon un sens d'enroulement Z. Les N' fils externes F3' sont enroulés en hélice autour des M' fils intermédiaires F2' selon un pas p3' tel que 10 mm ≤ p3' ≤ 40 mm, de préférence 12 mm ≤ p3' ≤ 30 mm, plus préférentiellement 15 mm ≤ p3' ≤ 25 mm. Ici p3'=18 mm.

Les pas p2' et p3' vérifient 0,33 ≤ (p3'-p2')/p3' ≤ 0,45; les exemples dont le rapport est inférieur à 0,36 (0,36 non-inclus) sont hors de la portée de la protection de la revendication 1.
0,36 ≤ (p3'-p2')/p3', de préférence 0,38 ≤ (p3'-p2')/p3'.
(p3'-p2')/p3' ≤ 0,42 et de préférence (p3'-p2')/p3' ≤ 0,40.
En l'espèce, (p3'-p2')/p3'=0,39.

Comme p1' est différent de p2' et p2' est différent de p3', chaque toron externe est à couches cylindriques.

La couche intermédiaire C2' de chaque toron externe TE est désaturée et ici complètement insaturée. La distance interfils I2' de la couche intermédiaire C2' séparant en moyenne les M' fils intermédiaires est avantageusement supérieure ou égale à 5 µm, de préférence supérieure ou égale à 15 µm, plus préférentiellement supérieure ou égale à 35 µm et encore plus préférentiellement à 50 µm et dans ce mode de réalisation, la distance interfils I2' est très préférentiellement supérieure ou égale à 60 µm et ici égale à 74,6 µm. La couche intermédiaire C2' étant complétement insaturée, la somme SI2' des distances interfils I2' de la couche intermédiaire C2' est inférieure au diamètre d2' des fils intermédiaire F2' de la couche intermédiaire C2'. Ici, la somme SI2'=7 x 0,0746=0,52 mm, valeur strictement supérieure à d2'=0,26 mm.

La couche externe C3' de chaque toron externe TE est désaturée et complètement insaturée. La distance interfils I3' de la couche externe C3' séparant en moyenne les N' fils externes est avantageusement supérieure ou égale à 5 µm, de préférence supérieure ou égale à 15 µm, plus préférentiellement supérieure ou égale à 35 µm et encore plus préférentiellement à 50 µm et dans ce mode de réalisation, la distance interfils I2' est très préférentiellement supérieure ou égale à 60 µm et ici égale à 70,7 µm. La somme SI3' des distances interfils I3' de la couche externe C3' est supérieure au diamètre d3' des fils externes F3' de la couche externe C3'. Ici, la somme SI3'=12 x 0,0707=0,85mm, valeur strictement supérieure à d3'=0,26 mm.

Chaque fil interne, intermédiaire et externe de chaque toron externe TE présente respectivement un diamètre d1', d2' et d3'. Chaque diamètre des fils interne d1', intermédiaires d2' et externes d3' de chaque toron externe TE va de 0,15 mm à 0,60 mm, de préférence de 0,20 mm à 0,50 mm, plus préférentiellement de 0,22 mm à 0,40 mm et encore plus préférentiellement de 0,24 mm à 0,35 mm.

Le fil interne F1' de chaque toron externe TE présente un diamètre d1' supérieur ou égal au diamètre d2' de chaque fil intermédiaire F2' de chaque toron externe TE et très préférentiellement 1≤d1'/d2'≤1,10. Le fil interne F1' de chaque toron externe TE présente un diamètre d1' supérieur ou égal au diamètre d3' de chaque fil externe F3' de chaque toron externe TE et très préférentiellement 1≤d1'/d3'≤1,10. Chaque diamètre d2' de chaque fil intermédiaire F2' de chaque toron externe TE et chaque diamètre d3' de chaque fil externe F3' de chaque toron externe TE sont tels que d2'=d3'.

En l'espèce, d1'=d2'=d3' et d1'=d2'=d3'=0,26 mm.

Chaque fil externe F3 de chaque toron interne TI présente un diamètre d3 supérieur ou égal au diamètre d3' de chaque fil externe F3 de chaque toron externe TE. De préférence, ici d3=0,35 mm > d3'=0,26 mm. De préférence, 1 < d3/d3' ≤ 2, plus préférentiellement 1 < d3/d3' ≤ 1,5 et encore plus préférentiellement 1,25 < d3/d3' ≤ 1,5 et ici d3/d3'=1,34.

Chaque fil présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

### PROCEDE DE FABRICATION DU CABLE SELON L'INVENTION

On fabrique le câble selon l'invention grâce à un procédé comprenant des étapes bien connues de l'homme du métier.

Chaque toron interne précédemment décrit est fabriqué selon des procédés connus comportant les étapes suivantes, opérées préférentiellement en ligne et en continu :
- tout d'abord, dans le cas où Q>1, une première étape d'assemblage par câblage des Q fils internes F1 de la couche interne C1 au pas p1 et dans le sens Z pour former la couche interne C1 en un premier point d'assemblage ; dans les modes de réalisation où Q=1, la première étape d'assemblage est évitée ;
- suivie d'une deuxième étape d'assemblage par câblage ou retordage des M fils intermédiaires F2 autour des Q fils internes F1 de la couche interne C1 au pas p2 et dans le sens Z pour former la couche intermédiaire C2 en un deuxième point d'assemblage;
- suivie d'une troisième étape d'assemblage par câblage ou retordage des N fils externes F3 autour des M fils intermédiaires F2 de la couche intermédiaire C2 au pas p3 et dans le sens Z pour former la couche externe C3 et chaque toron interne TI en un troisième point d'assemblage ;
- préférentiellement une étape d'équilibrage final des torsions.

Dans une étape de fabrication des torons externes utilisant les étapes suivantes opérées préférentiellement en ligne et en continu:
- tout d'abord, une première étape d'assemblage par câblage des Q fils internes F1 de la couche interne C1 au pas p1 et dans le sens Z pour former la couche interne C1 en un premier point d'assemblage ;
- suivie d'une deuxième étape d'assemblage par câblage des M' fils intermédiaires F2' autour des Q' fils internes F1' de la couche interne C1' au pas p2' et dans le sens Z pour former la couche intermédiaire C2' en un premier point d'assemblage ;
- suivie d'une troisième étape d'assemblage par câblage des N' fils externes F3' autour des M' fils intermédiaires F2' de la couche intermédiaire C2' au pas p3' et dans le sens Z pour former la couche externe C3' et chaque toron externe TE en un deuxième point d'assemblage;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Apres cette étape ultime d'équilibrage de la torsion, la fabrication du toron est terminée. Chaque toron est enroulé sur une ou plusieurs bobines de réception, pour stockage, avant l'opération ultérieure d'assemblage par câblage des torons élémentaires pour l'obtention du câble multi-torons.

Dans une étape de fabrication de la couche interne CI, on assemble par câblage les K torons internes TI au pas pi et dans le sens Z pour former la couche interne CI en un premier point d'assemblage.

Puis, dans une étape de fabrication ultérieure, on assemble par câblage les L torons externes TE autour de la couche interne CI au pas pe et dans le sens Z pour former l'assemblage des couches CI et CE. Eventuellement, dans une dernière étape d'assemblage, on enroule la frette F au pas pf dans le sens S autour de l'assemblage précédemment obtenu.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur comprise entre 1 et 4 mm bornes incluses. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

### CABLE SELON UN DEUXIEME MODE DE REALISATION DE L'INVENTION

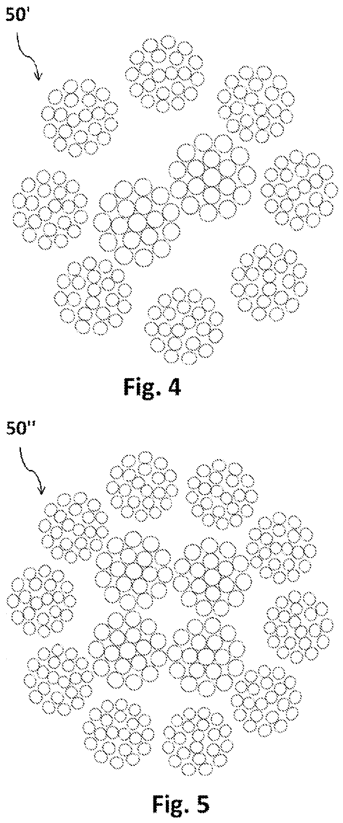

On a représenté sur la figure 4 un câble 50' selon un deuxième mode de réalisation de l'invention. Les éléments analogues au premier mode de réalisation sont désignés par des références identiques.

A la différence du premier mode de réalisation décrit précédemment, le câble 50' selon le deuxième mode de réalisation est tel que est tel que K=2 et L=8.

### CABLE SELON UN TROISIEME MODE DE REALISATION DE L'INVENTION

On a représenté sur la figure 5 un câble 50" selon un troisième mode de réalisation de l'invention. Les éléments analogues au premier mode de réalisation sont désignés par des références identiques.

A la différence du premier mode de réalisation du câble 50 décrit précédemment, le câble 50" selon le troisième mode de réalisation est tel que est tel que K=4 et L=10.

On a résumé dans le tableau A ci-dessous les caractéristiques pour les différents câbles 50, 50' et 50".

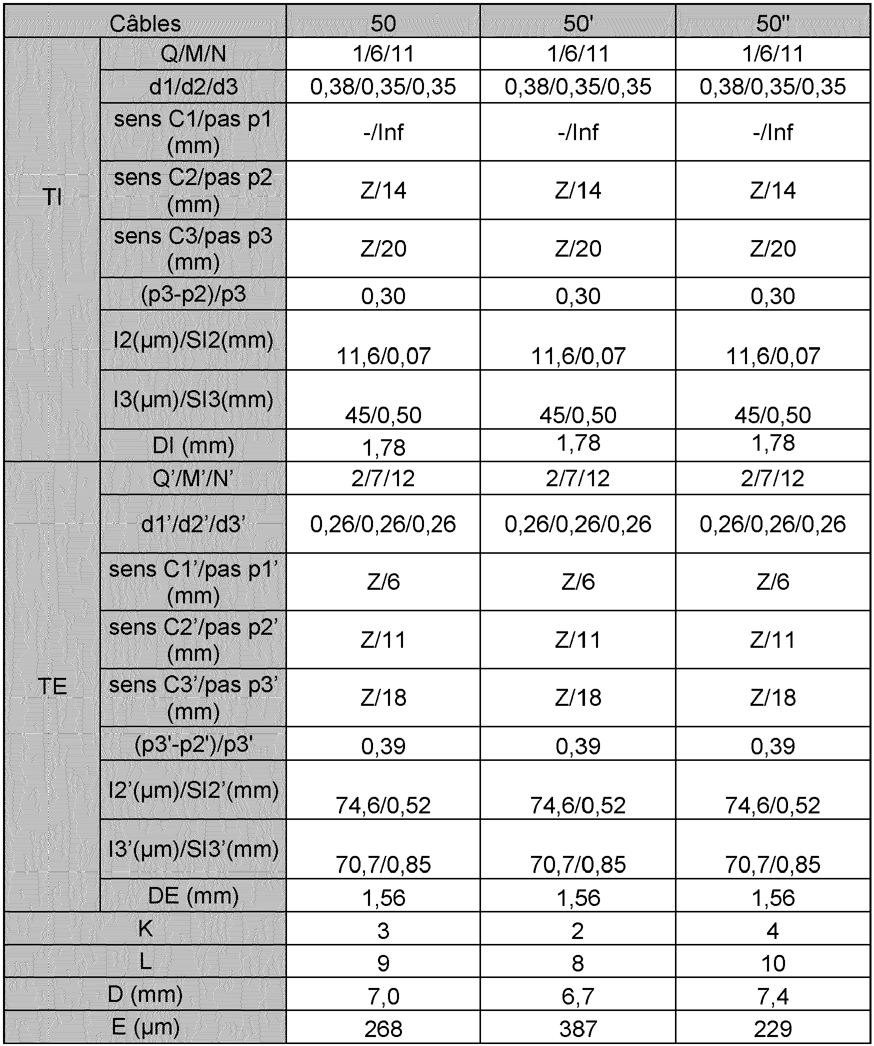

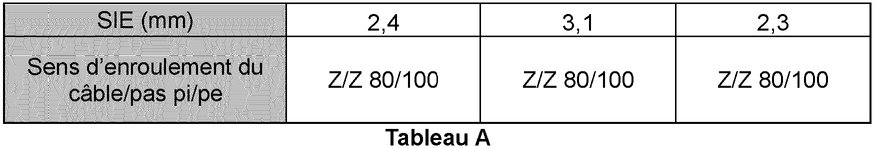

### CABLES SELON LES QUATRIEME AU QUINZIEME MODES DE REALISATION DE L'INVENTION

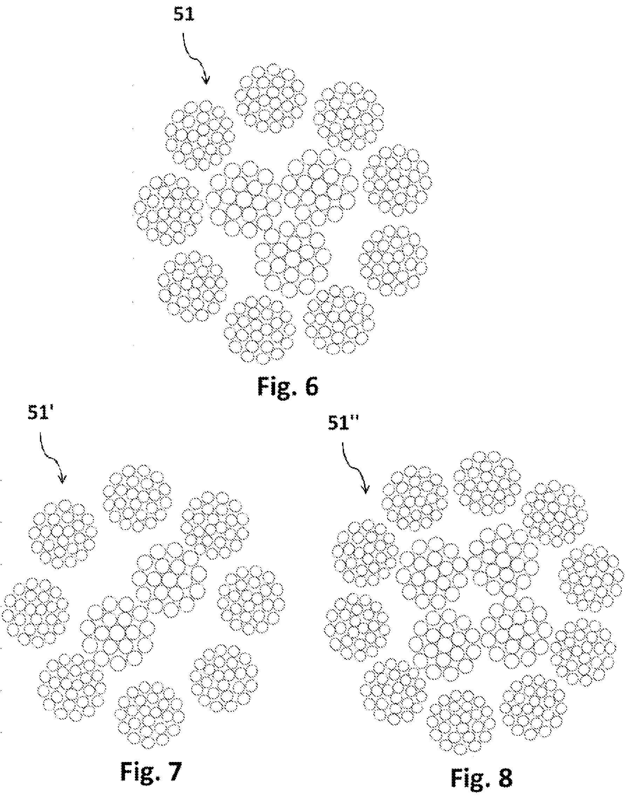

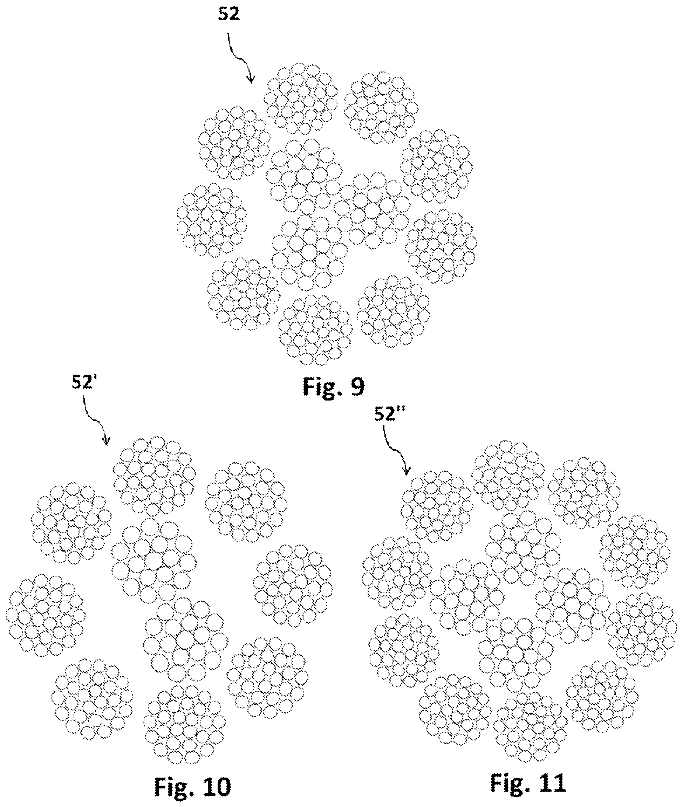

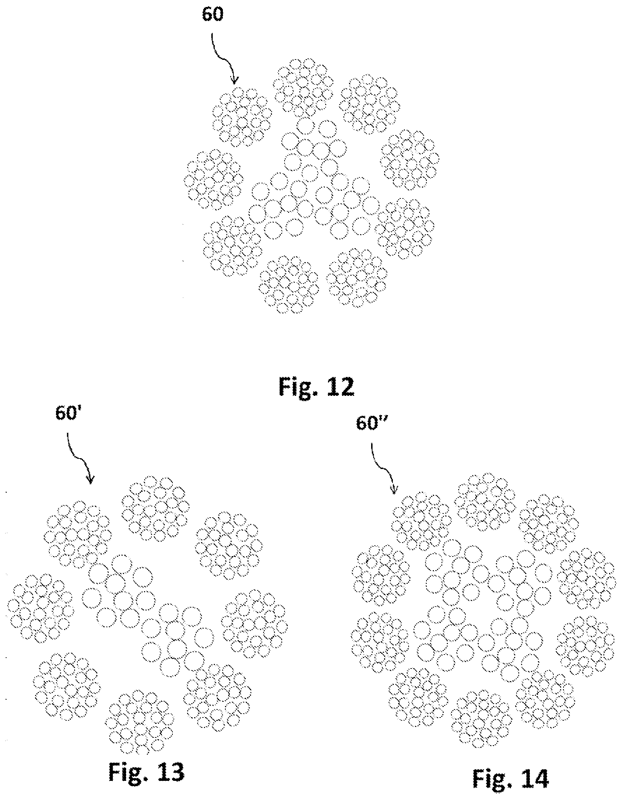

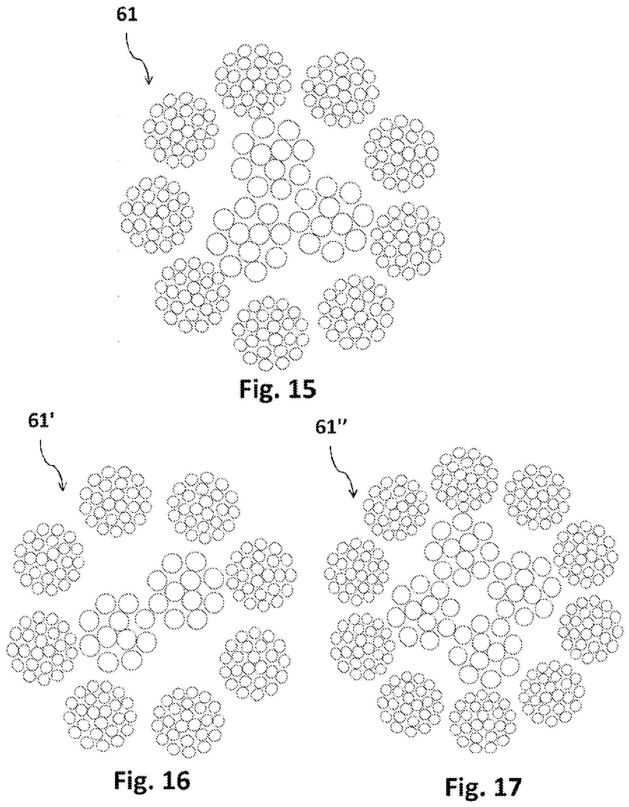

On a représenté sur les figures 6 à 17 les câbles 51, 51', 51", 52, 52', 52", 60, 60', 60", 61, 61' et 61" selon les quatrième au quinzième modes de réalisation de l'invention.

On a résumé dans les tableaux B et C ci-dessous les caractéristiques des différents câbles 51, 51', 51", 52, 52', 52", 60, 60', 60", 61, 61' et 61" selon les quatrième au quinzième modes de réalisation de l'invention.

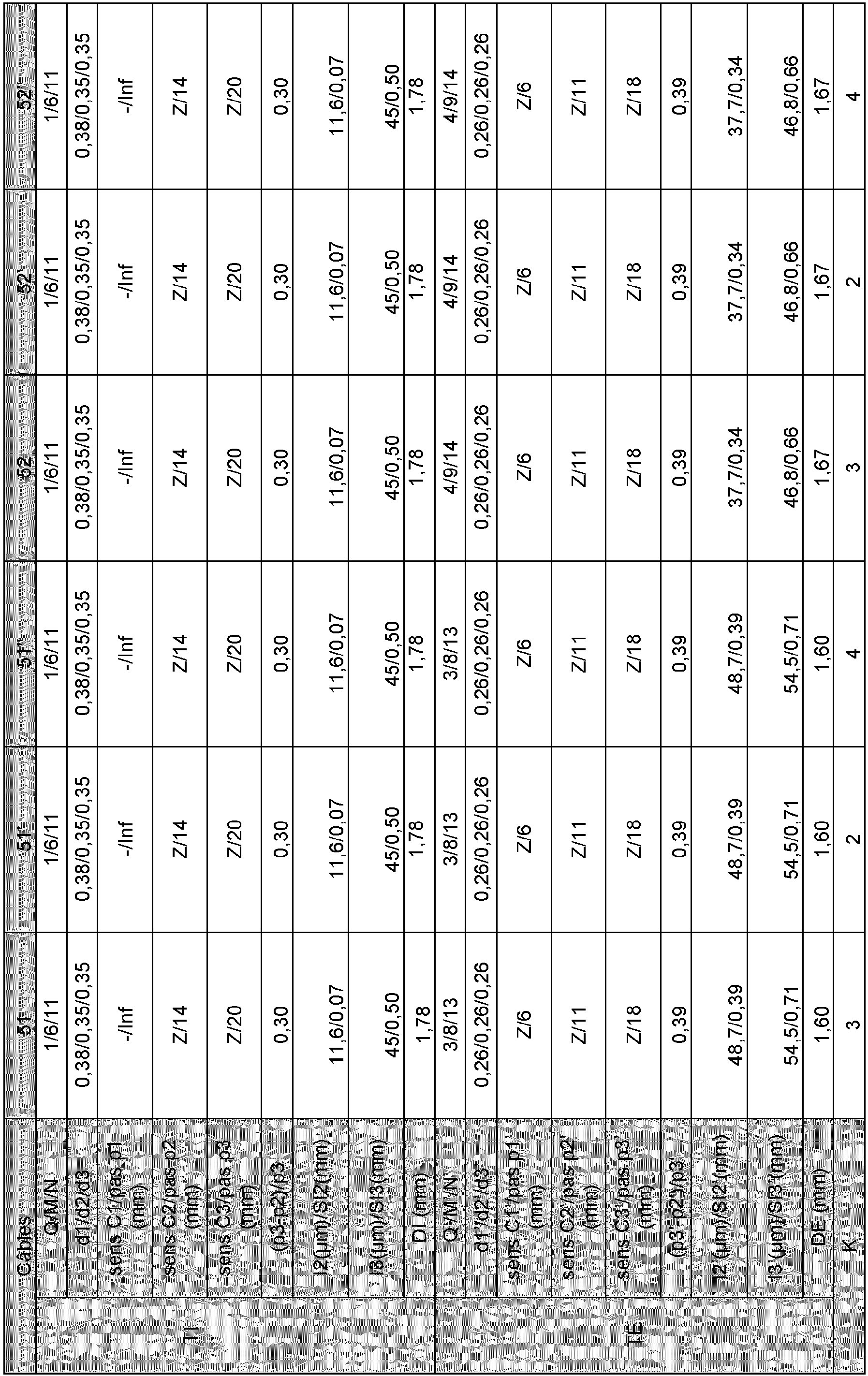

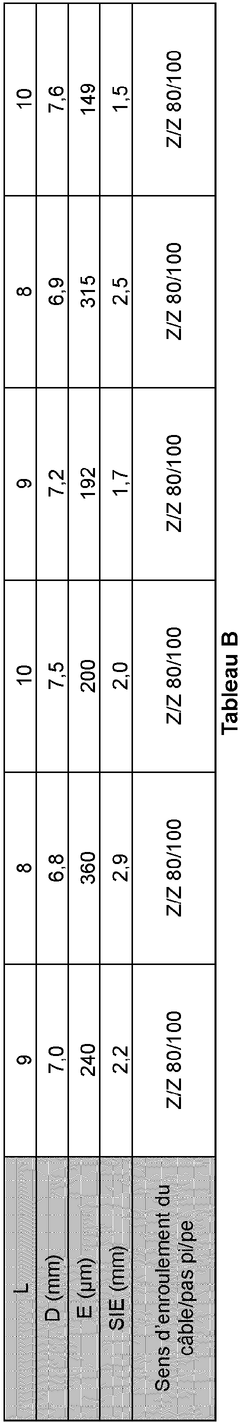

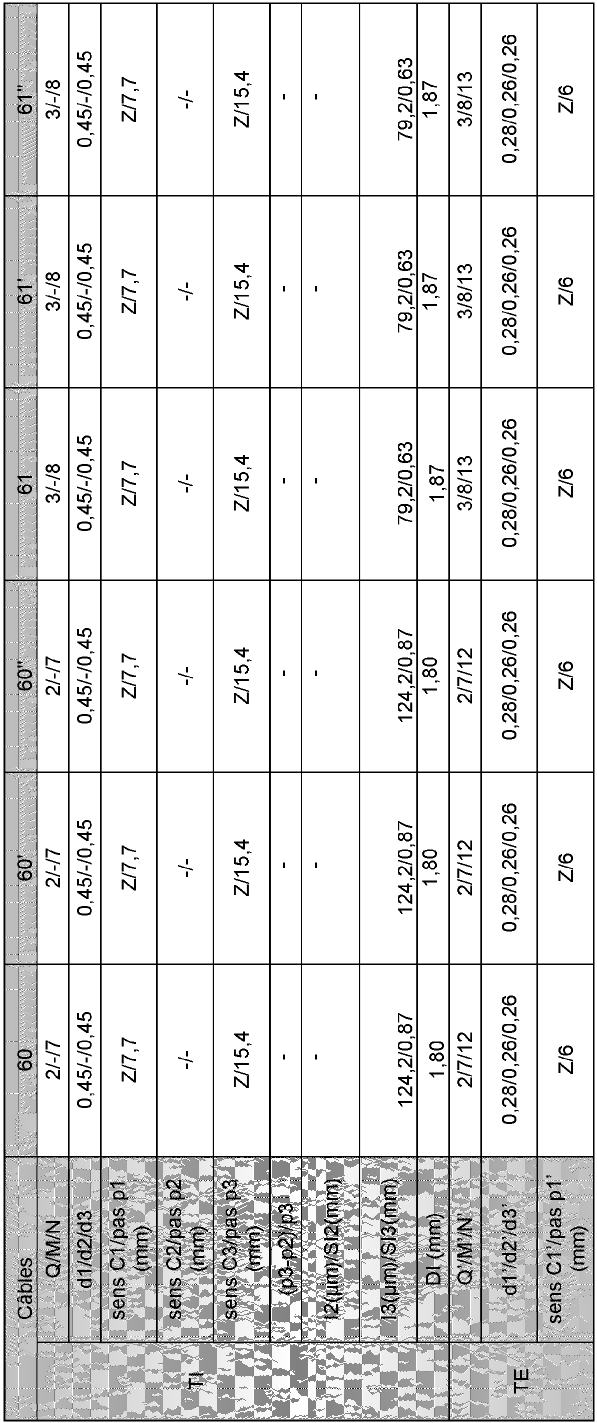

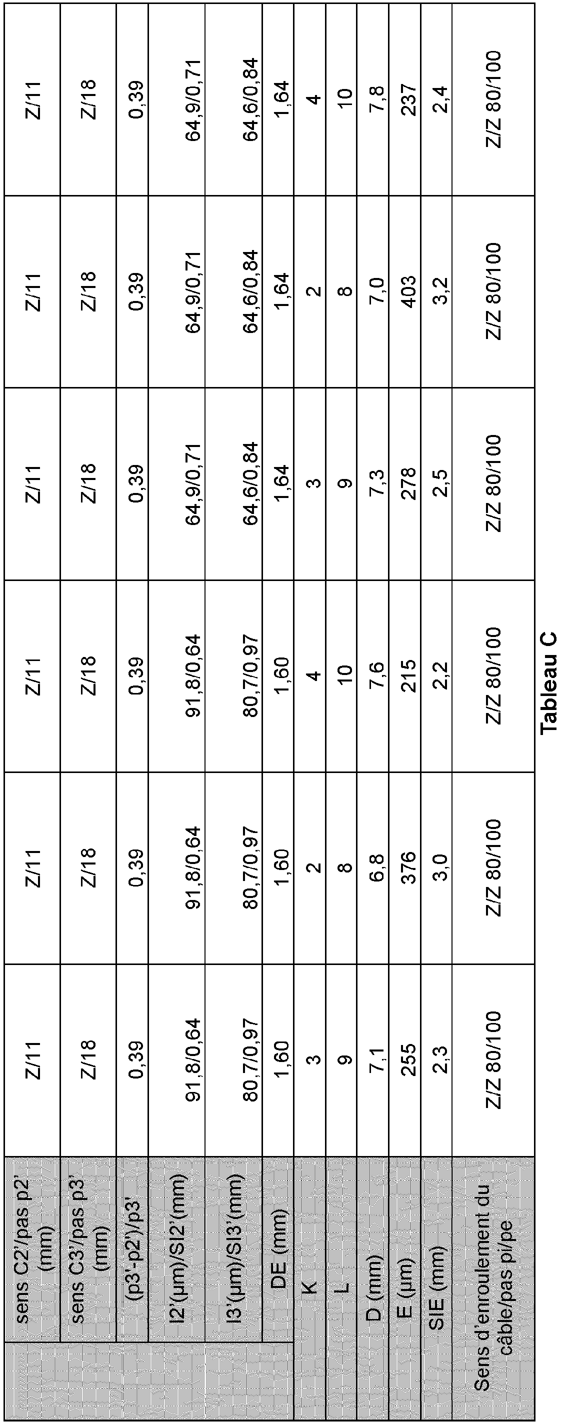

### TESTS COMPARATIFS

### Indicateur de pénétrabilité des torons par une composition élastomérique

Dans les tests qui suivent, on a déterminé la capacité d'un toron à être pénétrable par une composition élastomérique en simulant la taille des fenêtres de passage radial formées par deux fils adjacents F2' de la couche intermédiaire C2' et par deux fils adjacents F3' de la couche externe C3'. De telles fenêtres sont illustrées sur la figure 18 sur laquelle on a représenté une vue schématique d'un toron externe selon son axe principal P et sur la figure 19 qui représente la fenêtre de passage radial S définie précédemment.
Un tel indicateur de pénétrabilité du toron est une image de l'imperméabilité du toron à l'air. En effet, plus la taille des fenêtres est grande, plus l'indicateur de pénétrabilité est élevé, plus la composition d'élastomère est susceptible de pénétrer dans le toron et plus le toron est imperméable à l'air. La perméabilité pourrait être également déterminée par le test de perméabilité
permettant de déterminer la perméabilité longitudinale à l'air de torons ou de câbles testés, par mesure du volume d'air traversant une éprouvette sous pression constante pendant un temps donné. Le principe d'un tel test, bien connu de l'homme du métier, est de démontrer l'efficacité du traitement d'un toron ou d'un câble pour le rendre imperméable à l'air ; il a été décrit par exemple dans la norme ASTM D2692-98. Un tel test est réalisé sur des torons ou des câbles issus de fabrication et non vieillis. Les torons ou les câbles bruts sont préalablement enrobés de l'extérieur par une composition élastomérique dite d'enrobage. Pour cela, une série de 10 torons ou câbles disposés parallèlement (distance inter-câble : 20 mm) est placée entre deux couches ou "skims" (deux rectangles de 80 x 200 mm) d'une composition de composition élastomérique diénique à l'état cru, chaque skim ayant une épaisseur de 5 mm ; le tout est alors bloqué dans un moule, chacun des torons ou câbles étant maintenu sous une tension suffisante (par exemple 3 daN) pour garantir sa rectitude lors de la mise en place dans le moule, à l'aide de modules de serrage ; puis on procède à la vulcanisation (cuisson) pendant environ 10 à 12 heures à une température d'environ 120°C et sous une pression de 15 bar (piston rectangulaire de 80 x 200 mm). Après quoi, on démoule l'ensemble et on découpe 10 éprouvettes de torons ou câbles ainsi enrobés, sous forme de parallélépipèdes de dimensions 7x7x60 mm, pour caractérisation. On utilise comme composition élastomérique d'enrobage une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la composition élastomérique d'enrobage est de 10 MPa environ. Le test est réalisé sur 6 cm de longueur de toron ou câble, enrobé donc par sa composition élastomérique (ou composition élastomérique d'enrobage) environnante à l'état cuit, de la manière suivante : on envoie de l'air à l'entrée du toron ou câble, sous une pression de 1 bar, et on mesure le volume d'air à la sortie, à l'aide d'un débitmètre (calibré par exemple de 0 à 500 cm³/min). Pendant la mesure, l'échantillon de toron ou câble est bloqué dans un joint étanche comprimé (par exemple un joint en mousse dense ou en caoutchouc) de telle manière que seule la quantité d'air traversant le toron ou câble d'une extrémité à l'autre, selon son axe longitudinal, est prise en compte par la mesure ; l'étanchéité du joint étanche lui-même est contrôlée préalablement à l'aide d'une éprouvette de composition élastomérique pleine, c'est-à-dire sans toron ni câble. Le débit d'air moyen mesuré (moyenne sur les 10 éprouvettes) est d'autant plus faible que l'imperméabilité longitudinale du toron ou câble est élevée. La mesure étant faite avec une précision de ± 0,2 cm3/min, les valeurs mesurées inférieures ou égales à 0,2 cm3/min sont considérées comme nulles ; elles correspondent à un toron ou câble qui peut être qualifié d'étanche (totalement étanche) à l'air selon son axe (i.e., dans sa direction longitudinale).

Néanmoins à des fins de rapidité pour l'évaluation des torons, les inventeurs ont privilégié la simulation et le calcul des fenêtres S par rapport au test de perméabilité.

### Evaluation de l'indicateur de pénétrabilité des torons externes en fonction du pas p3' du câble 50

On a simulé différents torons externes analogues au toron externe des câbles 50, 51 et 52 selon l'invention en faisant varier la valeur de p2' pour différentes valeurs de p3', toutes les autres caractéristiques structurales du câble restant inchangées par rapport à la description précédente.

On a rassemblé dans les différents tableaux 50.1 à 52.6 les résultats de ces simulations en base 100 par rapport à chaque fois à un toron témoin tel que (p3'-p2')/p3'=0,31 pour Q'=2, (p3'-p2')/p3'=0,33 pour Q'=3 et (p3'-p2')/p3'=0,25 pour Q'=4. Ainsi pour une valeur de taille des fenêtres St pour le toron testé et une valeur de taille de fenêtre S0 pour le toron témoin, l'indicateur de pénétrabilité est égal à St*100/S0. Ainsi, un résultat supérieur à 100 signifie que le toron testé présente une pénétrabilité supérieure au toron témoin correspondant. On estime que la taille des fenêtres est significativement plus élevée lorsque l'indicateur de pénétrabilité est supérieur ou égal à 120, c'est-à-dire que la taille des fenêtres du toron testé est 20% supérieure à celle du toron témoin.

Chaque tableau 50.1 à 52.6 correspond respectivement à un pas p3' égal à 12, 14, 16, 18, 20 et 23 mm.

On note que, bien que la distance interfils I2' augmente lorsque p2' augmente, la valeur maximale des fenêtres de passage radial est obtenue pour des valeurs de I2' non nécessairement les plus élevées. Ainsi, avant la réalisation de l'invention, l'homme du métier, partant de l'hypothèse que plus I2' était petit, moins le toron était pénétrable, pouvait difficilement prévoir une pénétrabilité maximale pour des valeurs de p2' donnant des valeurs de I2' relativement faibles.

Dans l'intervalle du rapport (p3'-p2')/p3' allant de 0,33 à 0,45 dans le cas où Q'=2, allant de 0,35 à 0,42 dans le cas où Q'=3 et allant de 0,28 à 0,43 dans le cas où Q'=4, et pour chaque valeur de p3' testée, la valeur de l'indicateur de pénétrabilité est significativement supérieure à celle obtenue pour le toron témoin correspondant. Les rapports inférieurs à 0,36 (non-inclus) ne faisant pas partie de l'objet de protection de l'invention.

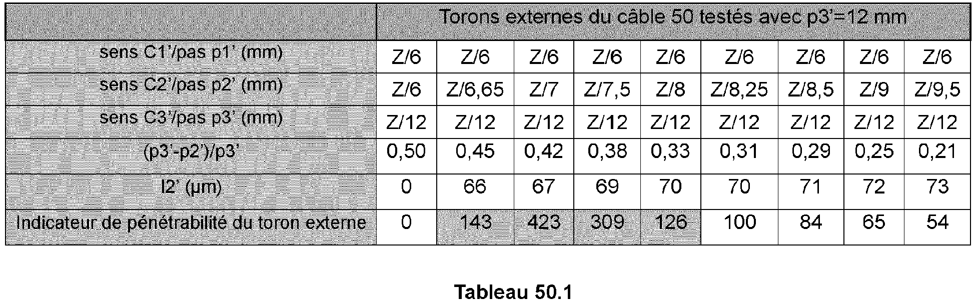

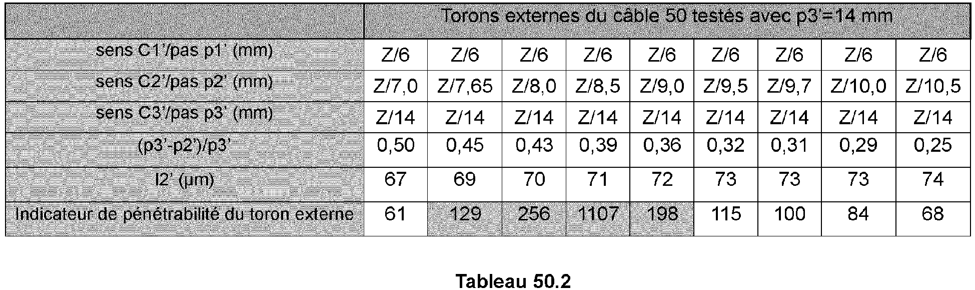

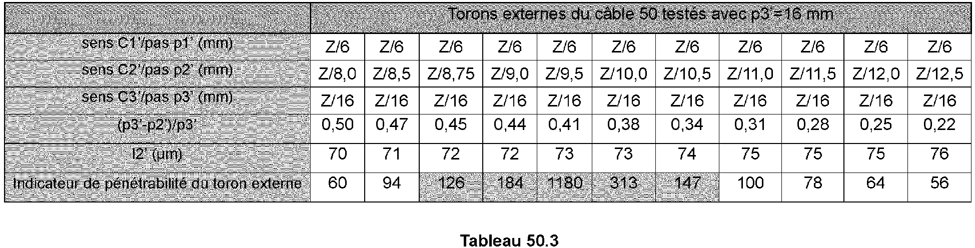

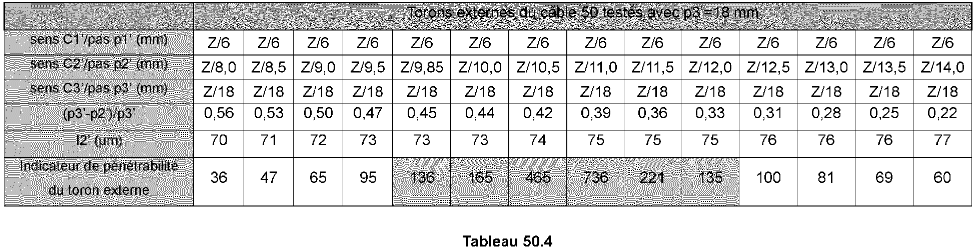

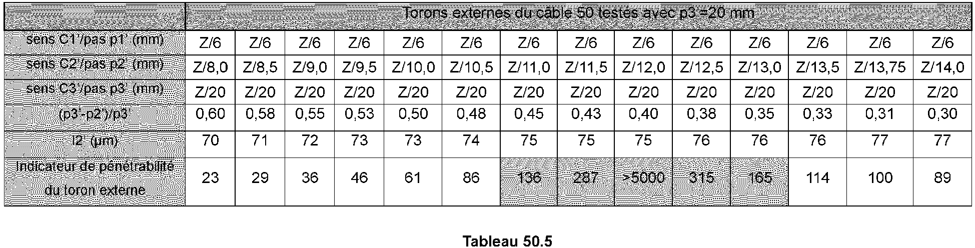

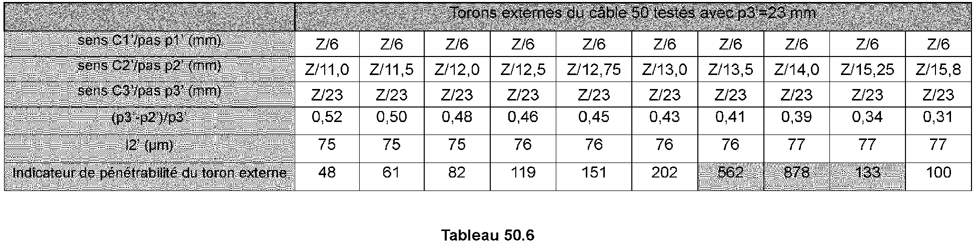

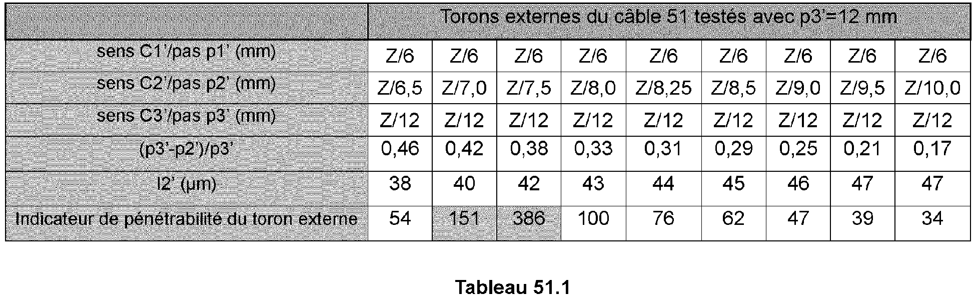

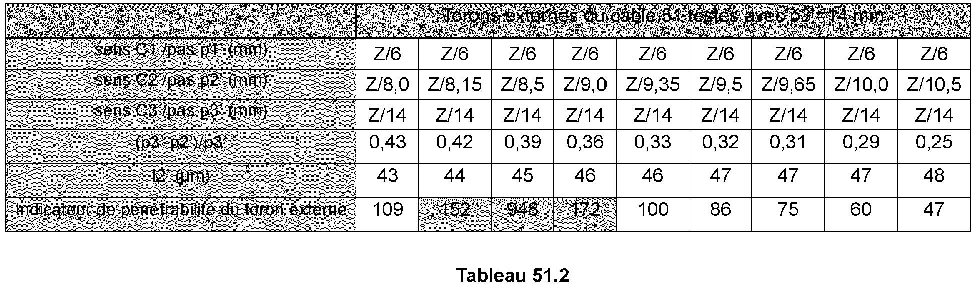

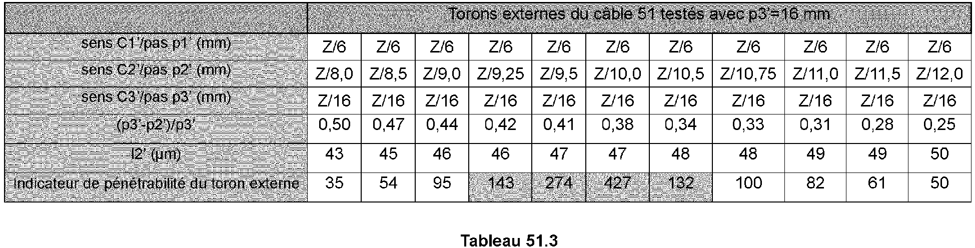

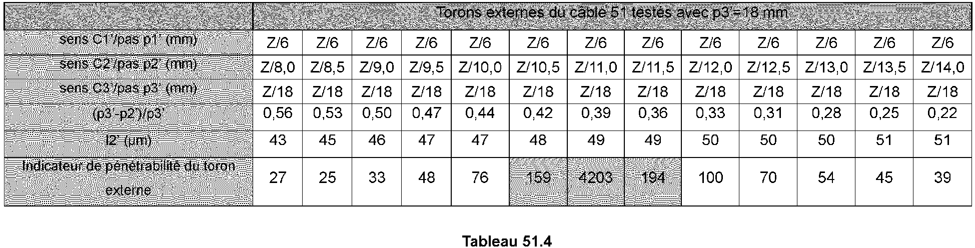

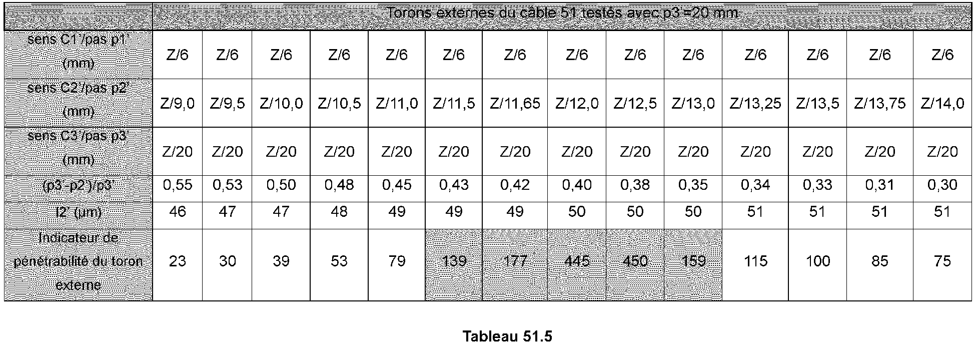

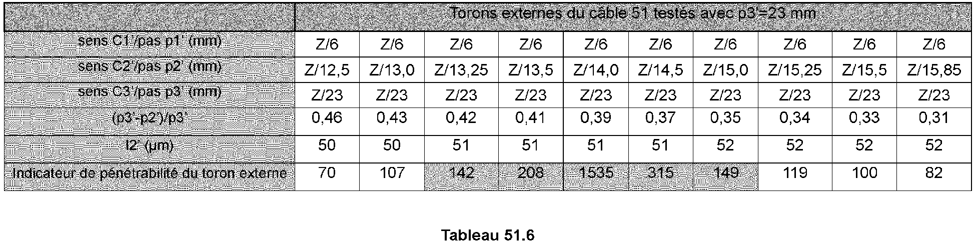

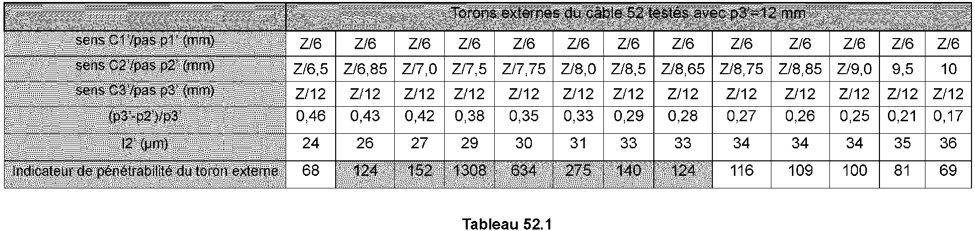

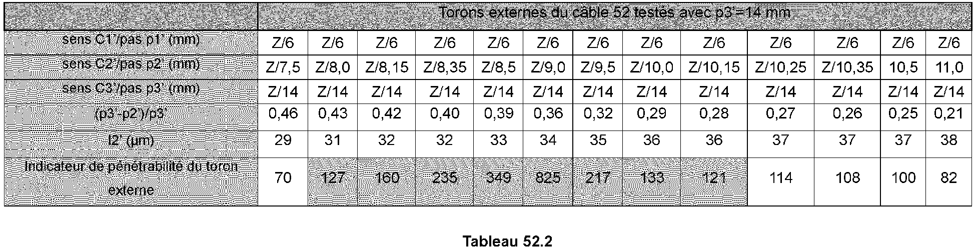

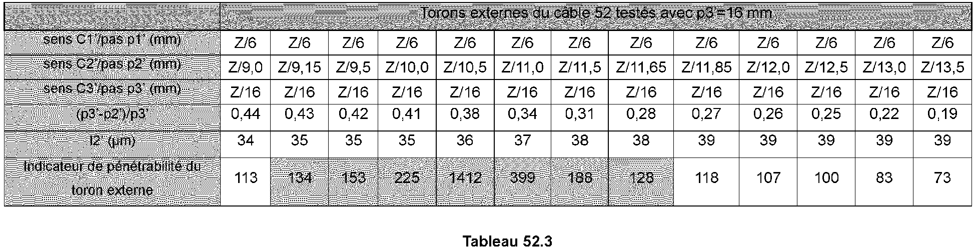

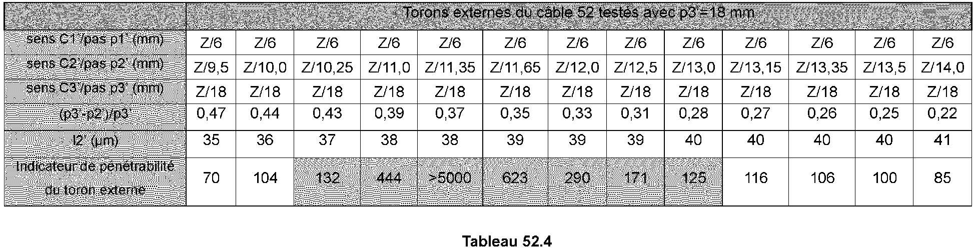

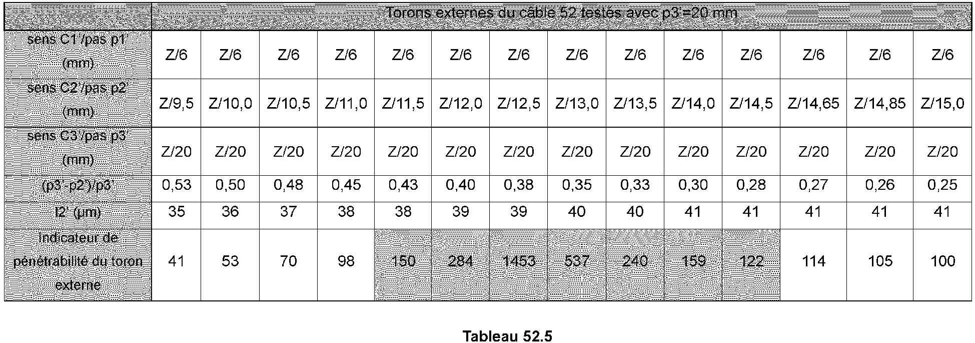

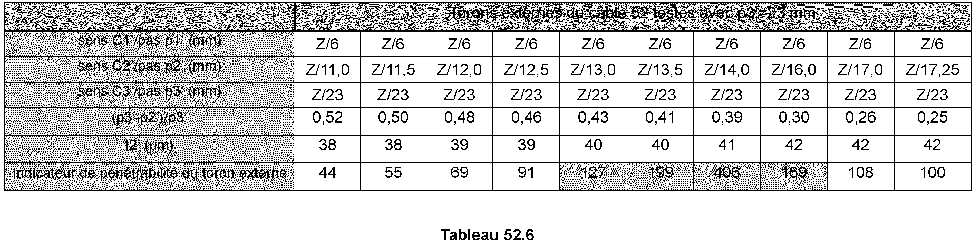

### Evaluation de l'indicateur de pénétrabilité des torons externes des câbles 50', 50", 51', 51", 52', 52", 60, 60', 60", 61, 61' et 61"

D'une façon analogue aux câbles 50, 51 et 52, on a simulé différents torons externes des câbles 60 et 61 selon les différents modes de réalisation de l'invention en faisant varier la valeur de p2' en fixant la valeur de p3' à celle décrite ci-dessus, toutes les autres caractéristiques structurales de chaque câble restant inchangées par rapport à la description précédente.

Les torons externes des câbles 50', 50", 51', 51", 52' et 52" étant identiques respectivement à ceux des câbles 50 pour les câbles 50' et 50", 51 pour les câbles 51' et 51" et 52 pour les câbles 52' et 52" la conclusion reste la même c'est-à-dire que l'intervalle du rapport (p3'-p2')/p3' allant de 0,33 à 0,45 dans le cas où Q'=2, allant de 0,35 à 0,42 dans le cas où Q'=3 et allant de 0,28 à 0,43 dans le cas où Q'=4. La plage de rapport inférieure à 0,36 (non-inclus) ne faisant pas partie de l'objet de la protection de l'invention.

On a rassemblé dans les différents tableaux 60 à 61 les résultats de ces simulations en base 100 par rapport à chaque fois à un toron témoin tel que (p3'-p2')/p3'=0,31 pour Q'=2 et (p3'-p2')/p3'=0,33 pour Q'=3. Ainsi pour une valeur de taille des fenêtres St pour le toron testé et une valeur de taille de fenêtre S0 pour le toron témoin, l'indicateur de pénétrabilité est égal à St*100/S0. Ainsi, un résultat supérieur à 100 signifie que le toron testé présente une pénétrabilité supérieure au toron témoin correspondant. On estime que la taille des fenêtres est significativement plus élevée lorsque l'indicateur de pénétrabilité est supérieur ou égal à 120, c'est-à-dire que la taille des fenêtres du toron testé est 20% supérieure à celle du toron témoin.

On note que, bien que la distance interfils I2' augmente lorsque p2' augmente, la valeur maximale de la taille des fenêtres de passage radial est obtenue pour des valeurs de I2' non nécessairement les plus élevées. Ainsi, avant la réalisation de l'invention, l'homme du métier, partant de l'hypothèse que plus I2' était petit, moins le toron était pénétrable, pouvait difficilement prévoir une pénétrabilité maximale pour des valeurs de p2' donnant des valeurs de I2' relativement faibles.

Dans l'intervalle du rapport (p3'-p2')/p3' allant de 0,33 à 0,45 dans le cas où Q'=2, allant de 0,35 à 0,42 dans le cas où Q'=3 et allant de 0,28 à 0,43 dans le cas où Q'=4, et pour chaque valeur de p3' testé, la valeur de l'indicateur de pénétrabilité est significativement supérieure à celle obtenue pour le toron témoin correspondant. Les rapports inférieurs à 0,36 (non-inclus) ne faisant pas partie de l'objet de la protection de l'invention.

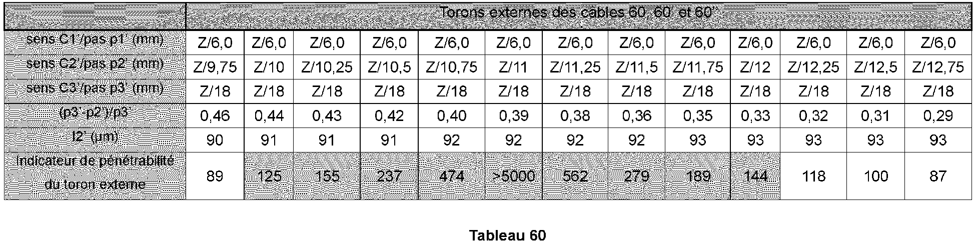

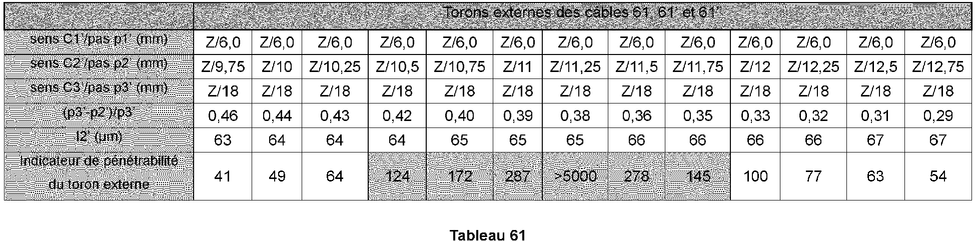

Les tableaux 60 et 61 montrent que, pour des constructions de câbles variées, la pénétration de la composition élastomérique dans les torons externes, et donc l'accessibilité de chaque toron interne par cette composition élastomérique, est significativement améliorée pour un rapport (p3'-p2')/p3' allant de 0,33 à 0,45 dans le cas où Q'=2, allant de 0,35 à 0,42 dans le cas où Q'=3, et allant de 0,28 à 0,43 dans le cas où Q'=4 par rapport aux câbles témoins pour lesquels (p3'-p2')/p3'=0,31 pour Q'=2, (p3'-p2')/p3'=0,33, pour Q'=3 et (p3'-p2')/p3'=0,25 dans le cas où Q'=4. Les rapports inférieurs à 0,36 (non-inclus) ne faisant pas partie de l'objet de protection de l'invention.

Bien entendu, l'invention n'est pas limitée aux exemples de réalisation précédemment décrits.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également combiner les caractéristiques des différents modes de réalisation décrits ou envisagés ci-dessus sous réserve que celles-ci soient compatibles entre elles.

## Revendications

1. Câble (50) multi-torons à deux couches, comprenant :
- une couche interne (CI) du câble constituée de K>1 torons internes (TI ) enroulés en hélice, chaque toron interne (TI) étant à au moins deux couches (C1, C3) et comprenant :
• une couche interne (C1) constituée de Q fil(s) interne(s) (F1), et
• une couche externe (C3) constituée de N fils externes (F3) enroulés autour de la couche interne (C1),
- une couche externe (CE) du câble constituée de L>1 torons externes (TE) enroulés autour de la couche interne (CI) du câble, chaque toron externe (TE) étant à trois couches (C1', C2', C3') et comprenant :
• une couche interne (C1') constituée de Q'=2, 3 ou 4 fils internes (F1') enroulés selon un pas p1', la couche interne (C1') étant enroulée selon un sens de couche interne (C1') de chaque toron externe (TE),
• une couche intermédiaire (C2') constituée de M' fils intermédiaires (F2'), enroulés autour de la couche interne (C1') selon un pas p2', la couche intermédiaire (C2') étant enroulée selon un sens de couche intermédiaire (C2') de chaque toron externe (TE), et
• une couche externe (C3') constituée de N' fils externes (F3') enroulés autour de la couche intermédiaire (C2') selon un pas p3',
dans lequel :
- p1' est différent de p2' et/ou le sens de couche interne (C1') de chaque toron externe (TE) est différent du sens de couche intermédiaire (C2') de chaque toron externe (TE),
- la couche intermédiaire (C2') de chaque toron externe (TE) est désaturée ;
- la couche externe (C3') de chaque toron externe (TE) est désaturée et **caractérisé en ce que** :
- les pas p2' et p3' vérifient :
- 0,36 ≤ (p3'-p2')/p3' ≤ 0,45 dans le cas où Q'=2,
- 0,36 ≤ (p3'-p2')/p3' ≤ 0,42 dans le cas où Q'=3,
- 0,36 ≤ (p3'-p2')/p3' ≤ 0,43 dans le cas où Q'=4 ; et dans lequel la distance E inter-torons moyenne séparant deux torons externes (TE) adjacents est supérieure ou égale à 70 µm.

2. Câble (50) selon la revendication précédente, dans lequel la distance E inter-torons moyenne séparant deux torons externes adjacents est supérieure ou égale à 100 µm, encore plus préférentiellement à 150 µm et très préférentiellement à 200 µm.

3. Câble (50) selon l'une quelconque des revendications précédentes, dans lequel :
- 0,38 ≤ (p3'-p2')/p3' dans le cas où Q'=2,
- 0,38 ≤ (p3'-p2')/p3' dans le cas où Q'=3.

4. Câble (50) selon l'une quelconque des revendications précédentes, dans lequel :
- (p3'-p2')/p3' ≤ 0,42 et de préférence (p3'-p2')/p3' ≤ 0,40 dans le cas où Q'=2,
- (p3'-p2')/p3' ≤ 0,40 dans le cas où Q'=3,
- (p3'-p2')/p3' ≤ 0,40 et de préférence (p3'-p2')/p3' ≤ 0,38 dans le cas où Q'=4.

5. Câble (50) selon l'une quelconque des revendications précédentes, dans lequel le pas p1' est tel que 3 mm ≤ p1' ≤ 16 mm, de préférence 4 mm ≤ p1' ≤ 13 mm et plus préférentiellement 5 mm ≤ p1' ≤ 10 mm.

6. Câble (50) selon l'une quelconque des revendications précédentes, dans lequel le pas p2' est tel que 8 mm ≤ p2' ≤ 20 mm, de préférence 9 mm ≤ p2' ≤ 18 mm et plus préférentiellement 10 mm ≤ p2' ≤ 16 mm.

7. Câble (50) selon l'une quelconque des revendications précédentes, dans lequel le pas p3' est tel que 10 mm ≤ p3' ≤ 40 mm, de préférence 12 mm ≤ p3' ≤ 30 mm et plus préférentiellement 15 mm ≤ p3' ≤ 25 mm.

8. Câble (50) selon l'une quelconque des revendications précédentes, dans lequel K=2, 3 ou 4, de préférence K=3 ou 4.

9. Câble (50) selon l'une quelconque des revendications précédentes, dans lequel L=7, 8, 9 ou 10, de préférence L=8, 9 ou 10 et plus préférentiellement L=8 ou 9.

10. Câble (50) selon l'une quelconque des revendications précédentes, dans lequel la couche interne (CI) du câble est enroulée en hélice selon un sens de couche interne du câble selon un pas pi, la couche externe (CE) du câble est enroulée en hélice selon un sens de couche externe du câble selon un pas pe, le câble vérifie l'une et/ou l'autre des caractéristiques suivantes :
- le sens de couche interne du câble est différent du sens de couche externe du câble,
- pi est différent de pe.

11. Câble (50) selon l'une quelconque des revendications précédentes, dans lequel M'=7, 8, 9 ou 10 et N'=12, 13, 14 ou 15.

12. Câble (50) selon l'une quelconque des revendications précédentes, dans lequel la somme SI2' des distances interfils (I2') de la couche intermédiaire (C2') de chaque toron externe (TE) est telle que SI2' < d3' avec d3' étant le diamètre de chaque fil externe (F3') de chaque toron externe (TE), de préférence SI2' ≤ 0,8 x d3'.

13. Câble (50) selon l'une quelconque des revendications précédentes, dans lequel la couche externe (C3') de chaque toron externe (TE) est complètement insaturée.

14. Câble (50) selon l'une quelconque des revendications précédentes, dans lequel la couche externe (C3) de chaque toron interne (TI) est désaturée, de préférence complètement insaturée.

15. Pneumatique (10), **caractérisé en ce qu'**il comprend le câble (50) selon l'une quelconque des revendications précédentes.

## Patentansprüche

1. Mehrlitziges Seil (50) mit zwei Lagen, umfassend:
- eine innere Lage (CI) des Seils, die aus K > 1 helixartig gewundenen inneren Litzen (TI) besteht, wobei jede innere Litze (TI) mindestens zwei Lagen (C1, C3) aufweist und umfasst:
• eine innere Lage (C1), die aus einem oder mehreren Q inneren Drähten (F1) besteht, und
• eine äußere Lage (C3), die aus N äußeren Drähten (F3) besteht, die um die innere Lage (C1) gewickelt sind,
- eine äußere Lage (CE) des Seils, die aus L > 1 äußeren Litzen (TE) besteht, die um die innere Lage (CI) des Seils gewunden sind, wobei jede äußere Litze (TE) drei Lagen (C1', C2', C3') aufweist und umfasst:
• eine innere Lage (C1'), die aus Q' = 2, 3 oder 4 inneren Drähten (F1') besteht, die gemäß einer Schrittweite p1' gewickelt sind, wobei die innere Lage (C1') gemäß einer Richtung einer inneren Lage (C1') jeder äußeren Litze (TE) gewickelt ist,
• eine Zwischenlage (C2'), die aus M' Zwischendrähten (F2') besteht, die gemäß einer Schrittweite p2' um die innere Lage (C1') gewickelt sind, wobei die Zwischenlage (C2') gemäß einer Richtung einer Zwischenlage (C2') jeder äußeren Litze (TE) gewickelt ist, und
• eine äußere Lage (C3'), die aus N' äußeren Drähten (F3') besteht, die gemäß einer Schrittweite p3' um die Zwischenlage (C2') gewickelt sind,
wobei:
- sich p1' von p2' unterscheidet und/oder sich die Richtung einer inneren Lage (C1') jeder äußeren Litze (TE) von der Richtung einer Zwischenlage (C2') jeder äußeren Litze (TE) unterscheidet,
- die Zwischenlage (C2') jeder äußeren Litze (TE) entsättigt ist;
- die äußere Lage (C3') jeder äußeren Litze (TE) entsättigt ist; und **dadurch gekennzeichnet, dass**:
- die Schrittweiten p2' und p3' Folgendes erfüllen:
- 0,36 ≤ (p3'-p2')/p3' ≤ 0,45, falls Q'=2,
- 0,36 ≤ (p3'-p2')/p3' ≤ 0,42, falls Q'=3,
- 0,36 ≤ (p3'-p2')/p3' ≤ 0,43, falls Q'=4; wobei der mittlere Zwischenlitzenabstand E, der zwei benachbarte äußere Litzen (TE) trennt, größer oder gleich 70 um ist.

2. Seil (50) nach dem vorhergehenden Anspruch, wobei der mittlere Zwischenlitzenabstand E, der zwei benachbarte äußere Litzen trennt, größer oder gleich 100 µm, stärker bevorzugt größer oder gleich 150 µm und besonders bevorzugt größer oder gleich 200 µm ist.

3. Seil (50) nach einem der vorangehenden Ansprüche, wobei:
- 0,38 ≤ (p3'-p2')/p3', falls Q'=2,
- 0,38 ≤ (p3'-p2')/p3', falls Q'=3.

4. Seil (50) nach einem der vorangehenden Ansprüche, wobei:
- (p3'-p2')/p3' ≤ 0,42 und vorzugsweise (p3'-p2')/p3' ≤ 0,40, falls Q'=2,
- (p3'-p2')/p3' ≤ 0,40, falls Q'=3,
- (p3'-p2')/p3' ≤ 0,40 und vorzugsweise (p3'-p2')/p3' ≤ 0,38, falls Q'=4.

5. Seil (50) nach einem der vorhergehenden Ansprüche, wobei die Schrittweite p1' derart ist, dass 3 mm ≤ p1' ≤ 16 mm, vorzugsweise 4 mm ≤ p1' ≤ 13 mm und stärker bevorzugt 5 mm ≤ p1' ≤ 10 mm ist.

6. Seil (50) nach einem der vorhergehenden Ansprüche, wobei die Schrittweite p2' derart ist, dass 8 mm ≤ p2' ≤ 20 mm, vorzugsweise 9 mm ≤ p2' ≤ 18 mm und stärker bevorzugt 10 mm ≤ p2' ≤ 16 mm ist.

7. Seil (50) nach einem der vorhergehenden Ansprüche, wobei die Schrittweite p3' derart ist, dass 10 mm ≤ p3' ≤ 40 mm, vorzugsweise 12 mm ≤ p3' ≤ 30 mm und stärker bevorzugt 15 mm ≤ p3' ≤ 25 mm ist.

8. Seil (50) nach einem der vorhergehenden Ansprüche, wobei K = 2, 3 oder 4 und vorzugsweise K = 3 oder 4 ist.

9. Seil (50) nach einem der vorhergehenden Ansprüche, wobei L = 7, 8, 9 oder 10, vorzugsweise L = 8, 9 oder 10 und stärker bevorzugt L = 8 oder 9 ist.

10. Seil (50) nach einem der vorhergehenden Ansprüche, wobei die innere Lage (CI) des Seils helixartig in einer Richtung der inneren Lage des Seils mit einer Schrittweite pi gewickelt ist, die äußere Lage (CE) des Seils helixartig in einer Richtung der äußeren Lage des Seils mit einer Schrittweite pe gewickelt ist und das Seil das eine und/oder das andere der folgenden Merkmale erfüllt:
- die Richtung der inneren Lage des Seils unterscheidet sich von der Richtung der äußeren Lage des Seils,
- pi unterscheidet sich von pe.

11. Seil (50) nach einem beliebigen der vorhergehenden Ansprüche, wobei M' = 7, 8, 9 oder 10 und N' = 12, 13, 14 oder 15 ist.

12. Seil (50) nach einem der vorhergehenden Ansprüche, wobei die Summe SI2' der Abstände (I2') zwischen den Drähten der Zwischenlage (C2') jeder äußeren Litze (TE) derart ist, dass SI2' < d3' ist, wobei d3' der Durchmesser jedes äußeren Drahtes (F3') jeder äußeren Litze (TE) ist, vorzugsweise SI2' ≤ 0,8 x d3'.

13. Seil (50) nach einem der vorhergehenden Ansprüche, wobei die äußere Lage (C3') jeder äußeren Litze (TE) vollständig ungesättigt ist.

14. Seil (50) nach einem der vorhergehenden Ansprüche, wobei die äußere Lage (C3) jeder inneren Litze (TI) entsättigt ist, vorzugsweise vollständig ungesättigt ist.

15. Reifen (10), **dadurch gekennzeichnet, dass** er das Seil (50) nach einem der vorhergehenden Ansprüche umfasst.

## Claims

1. Two-layer multi-strand cord (50), comprising:
- an internal layer (CI) of the cord made up of K>1 internal strands (TI) wound in a helix, each internal strand (TI) being an at least two-layer (C1, C3) strand and comprising:
• an internal layer (C1) made up of Q internal thread(s) (F1) and
• an external layer (C3) made up of N external threads (F3) wound around the internal layer (C1),
- an external layer (CE) of the cord made up of L>1 external strands (TE) wound around the internal layer (CI) of the cord, each external strand (TE) being a three-layer (C1', C2', C3') strand and comprising:
• an internal layer (C1') made up of Q'=2, 3 or 4 internal threads (F1') wound with a pitch p1', the internal layer (C1') being wound in an internal-layer (C1') direction of each external strand (TE),
• an intermediate layer (C2') made up of M' intermediate threads (F2') , wound around the internal layer (C1') with a pitch p2', the intermediate layer (C2') being wound in an intermediate-layer (C2') direction of each external strand (TE), and
• an external layer (C3') made up of N' external threads (F3') wound around the intermediate layer (C2') with a pitch p3',
wherein:
- p1' is different from p2' and/or the internal-layer (C1') direction of each external strand (TE) is different from the intermediate-layer (C2') direction of each external strand (TE),
- the intermediate layer (C2') of each external strand (TE) is desaturated;
- the external layer (C3') of each external strand (TE) is desaturated; and **characterized in that:**
- the pitches p2' and p3' satisfy the relationship:
- 0.36 ≤ (p3'-p2')/p3' ≤ 0.45 in instances in which Q'=2,
- 0.36 ≤ (p3'-p2')/p3' ≤ 0.42 in instances in which Q'=3,
- 0.36 ≤ (p3'-p2')/p3' ≤ 0.43 in instances in which Q'=4; and the mean inter-strand distance E separating two adjacent external strands (TE) is greater than or equal to 70 µm.

2. Cord (50) according to the preceding claim, in which the mean inter-strand distance E separating two adjacent external strands is greater than or equal to 100 µm, more preferably still, than/to 150 µm, highly preferably, than/to 200 µm.

3. Cord (50) according to any one of the preceding claims, in which
- 0.38 ≤ (p3'-p2')/p3' in instances in which Q'=2,
- 0.38 ≤ (p3'-p2')/p3' in instances in which Q'=3.

4. Cord (50) according to any one of the preceding claims, in which
- (p3'-p2')/p3' ≤ 0.42 and preferably (p3'-p2')/p3' ≤ 0.40 in instances in which Q'=2,
- (p3'-p2')/p3' ≤ 0.40 in instances in which Q'=3,
- (p3'-p2')/p3' ≤ 0.40 and preferably (p3'-p2')/p3' ≤ 0.38 in instances in which Q'=4.

5. Cord (50) according to any one of the preceding claims, in which the pitch p1' is such that 3 mm ≤ p1' ≤ 16 mm, for preference 4 mm ≤ p1' ≤ 13 mm, and more preferably 5 mm ≤ p1' ≤ 10 mm.

6. Cord (50) according to any one of the preceding claims, in which the pitch p2' is such that 8 mm ≤ p2' ≤ 20 mm, for preference 9 mm ≤ p2' ≤ 18 mm, and more preferably 10 mm ≤ p2' ≤ 16 mm.

7. Cord (50) according to any one of the preceding claims, in which the pitch p3' is such that 10 mm ≤ p3' ≤ 40 mm, for preference 12 mm ≤ p3' ≤ 30 mm, and more preferably 15 mm ≤ p3' ≤ 25 mm.

8. Cord (50) according to any one of the preceding claims, in which K=2, 3 or 4, and preferably K=3 or 4.

9. Cord (50) according to any one of the preceding claims, in which L=7, 8, 9 or 10, and preferably L=8, 9 or 10 and more preferably L=8 or 9.

10. Cord (50) according to any one of the preceding claims, in which the internal layer (CI) of the cord is wound in a helix in a cord internal-layer direction with a pitch pi, and the external layer (CE) of the cord is wound in a helix in a cord external-layer direction with a pitch pe, and the cord satisfies one and/or another of the following features:
- the cord internal-layer direction is different from the cord external-layer direction,
- pi is different from pe.

11. Cord (50) according to any one of the preceding claims, in which M'=7, 8, 9 or 10 and N'=12, 13, 14 or 15

12. Cord (50) according to any one of the preceding claims, in which the sum SI2' of the inter-thread distances (I2') of the intermediate layer (C2') of each external strand (TE) is such that SI2' < d3' where d3' is the diameter of each external thread (F3') of each external strand (TE), preferably SI2' ≤ 0.8 x d3'.

13. Cord (50) according to any one of the preceding claims, in which the external layer (C3') of each external strand (TE) is completely unsaturated.

14. Cord (50) according to any one of the preceding claims, in which the external layer (C3) of each internal strand (TI) is desaturated, preferably completely unsaturated.

15. Tyre (10), **characterized in that** it comprises the cord (50) according to any one of the preceding claims.
